# EUROPEAN PATENT APPLICATION

(11) **EP 2 806 545 A1**
(43) Date of publication of application: **26.11.2014**
(21) Application number: 12865823.4
(22) Date of filing: 28.12.2012
(51) Int. Cl.: H02K 21/14, H02K 29/06, H02P 6/10

(54) **PERMANENT MAGNET TYPE ROTATING MACHINE**

(30) Priority: 20.01.2012 JP 2012009787
(71) Applicant: TMS Co. Ltd., Tokyo 143-0003 (JP)
(72) Inventor: SHISHIDO Takayuki, Tokyo 143-0003 (JP); ABE Katsuhisa, Tokyo 143-0003 (JP); KOBATAKE Masao, Tokyo 143-0003 (JP); SHINOHARA Kazuhisa, Tokyo 143-0003 (JP)
(74) Representative: Klunker . Schmitt-Nilson . Hirsch
(86) International application number: PCT/JP2012/084198
(87) International publication number: WO 2013/108581

(57) **Abstract**

A permanent magnet-type rotating machine comprising: a rotor 24 which has permanent magnets 30 disposed thereon; a stator 40 which has electromagnets 48 disposed thereon; a positional information acquisition unit 60 that acquires positional information of permanent magnets 30; and an electromagnet controller 92 that turns on/off the electromagnets 48 based on the positional information, the electromagnet 48 includes a first electromagnetic coil 52 that excites the magnetic pole of the core 50 that faces the magnetic pole of the permanent magnet 30 to a polarity opposite to a polarity of the magnetic pole of the permanent magnet 30 and a second electromagnetic coil 54, that excites the magnetic pole of the core 50 that faces the magnetic pole of the permanent magnet 30 to the same polarity as a polarity of the magnetic pole of the permanent magnet 30, the first electromagnetic coil 52 and the second electromagnetic coil 54 are coaxially arranged, the electromagnet controller 92 turns on the second electromagnetic coil 54 in a period of time from turning on to turning off of the first electromagnetic coil 52 and turns on the first electromagnetic coil 52 before residual magnetism in the core 50 by the second electromagnetic coil 54 becomes zero after the second electromagnetic coil 54 is turned off, based on the positional information.

## Description

### Field of the Invention

The present invention relates to a permanent magnet-type rotating machine including a rotor and a stator, one of which has permanent magnets disposed thereon and the other of which has electromagnets disposed thereon, in which the rotor is rotated by controlling the electromagnets.

### Background of the Art

A permanent magnet-type rotating machine is a device, for example, including a rotor having permanent magnets disposed thereon and a stator having electromagnets disposed thereon, in which the rotor is rotated using the magnetic force of the permanent magnets and the magnetic force produced by the electromagnets. A variety of permanent magnet-type rotating machines have conventionally been developed. In the permanent magnet-type rotating machines of this type, large cogging torque causes uneven rotation of the rotor and reduction in rotation speed and produces energy loss, resulting in insufficient rotation torque. Reduction in cogging torque is therefore an important task in permanent magnet-type rotating machines.

A permanent magnet-type rotating machine disclosed in Patent Reference 1, for example, includes a rotor having a plurality of permanent magnets disposed at regular intervals circumferentially and a stator having a plurality of electromagnets disposed at regular intervals circumferentially around the rotor in order to reduce cogging torque. One or more magnetic substances are disposed between the electromagnets on the stator. The rotor is rotated by the magnetic repulsion force produced between the permanent magnets and the electromagnets by intermittently energizing each electromagnet on the stator. Changes in the magnetic field produced by intermittently energizing the electromagnet are dispersively absorbed by the magnetic substances disposed on both sides of the electromagnet. Cogging torque caused by changes in the magnetic field is thus reduced in this permanent magnet-type rotating machine.

### Reference of the Prior Art

### Patent Reference

**Patent Reference 1:** Japanese Patent Application Publication No. 2009-118706

### Disclosure of the Invention

### Problems the Invention is intended to solve

The core of an electromagnet is however magnetized by a magnetic field produced. The residual magnetism in the core does not become zero immediately after current supplied to the electromagnet is cut off. In Patent Reference 1, therefore, the rotation of the rotor is hindered by the residual magnetism in the core, so that cogging torque is not reduced sufficiently. Because of the residual magnetism in the core, which hinders rotation of the rotor, the rotor requires a considerable amount of time to reach a predetermined rotation speed, and in addition, sufficient torque is not applied to the rotor.

The present invention is made to solve the problem as described above and aims to provide a permanent magnet-type rotating machine capable of reducing cogging torque and achieving sufficient rotation torque.

### Means for Solving the Problem

In accordance with an aspect of the present invention, a permanent magnet-type rotating machine comprising: a rotor and a stator, one of which has a plurality of permanent magnets disposed thereon at regular intervals circumferentially, and the other of which has a plurality of electromagnets disposed thereon at regular intervals circumferentially, each electromagnet having a magnetic pole of a core that faces a magnetic pole of the corresponding permanent magnet; a positional information acquisition unit that acquires positional information of the permanent magnets relative to the electromagnets; and an electromagnet controller that turns on/off each of the electromagnets based on the acquired positional information of the permanent magnets, wherein each electromagnet includes a first electromagnetic coil that excites the magnetic pole of the core that faces the magnetic pole of the permanent magnet to a polarity opposite to a polarity of the magnetic pole of the permanent magnet and a second electromagnetic coil, that excites the magnetic pole of the core that faces the magnetic pole of the permanent magnet to the same polarity as a polarity of the magnetic pole of the permanent magnet, the first electromagnetic coil and the second electromagnetic coil are coaxially arranged, and the electromagnet controller turns on the second electromagnetic coil in a period of time from turning on to turning off of the first electromagnetic coil and turns on the first electromagnetic coil before residual magnetism in the core by the second electromagnetic coil becomes zero after the second electromagnetic coil is turned off, based on the acquired positional information of the permanent magnets.

In the permanent magnet-type rotating machine, an axial line direction between the magnetic poles of each electromagnet is set to be inclined by a predetermined angle in a rotation direction of the rotor relative to an axial line direction between the magnetic poles of the permanent magnet.

In the permanent magnet-type rotating machine, when the electromagnet and the permanent magnet approach each other, the permanent magnet is set such that a length of a surface that approaches the electromagnet in a direction between the magnetic poles of the permanent magnet is shorter than a length of a portion where a magnetic force of the permanent magnet is maximum in the direction between the magnetic poles.

In the permanent magnet-type rotating machine, the permanent magnets are disposed to face the magnetic poles at both ends of the core, and the facing magnetic poles of the permanent magnets disposed at the ends are set to have polarities opposite to each other.

In the permanent magnet-type rotating machine, the permanent magnets adjacent in a rotation direction of the rotor have different polarities at the magnetic poles that face the core.

In the permanent magnet-type rotating machine, an axial line direction of each electromagnet is disposed in a horizontal state, and the rotor is configured to rotate on a horizontal plane.

In the permanent magnet-type rotating machine, an axial line direction of each electromagnet is disposed in a vertical state, and the rotor is configured to rotate on a horizontal plane.

In the permanent magnet-type rotating machine, the permanent magnets are disposed to face the magnetic poles at both ends of the core, and the facing magnetic poles of the permanent magnets disposed at the ends are set to have polarities opposite to each other, and the core of each electromagnet is bent approximately in a shape of letter V, and the core is disposed to be inclined relative to the permanent magnets disposed to face the magnetic poles at both ends of the core.

In the permanent magnet-type rotating machine, the positional information acquisition unit includes: a slit plate having a slit formed at a position corresponding to the permanent magnet, the slit plate rotating integrally with the rotor; a light-emitting element that outputs light to be guided to the slit plate; and a light-receiving element that receives the light passing through the slit, and the positional information of the permanent magnet is acquired based on the light passing through the slit or blocked by the slit plate.

In the permanent magnet-type rotating machine, the positional information acquisition unit is configured with a rotary encoder that acquires the positional information as information related to a rotation angle of the rotor.

In the permanent magnet-type rotating machine, further comprising a plurality of rotating mechanisms each including the rotor and the stator, wherein an arrangement relation between the permanent magnet and the electromagnet in each rotating mechanisms is set such that a timing when residual magnetism in the core of the electromagnet in each rotating mechanisms becomes zero differs.

In the permanent magnet-type rotating machine, a rotor shaft of the rotor is configured with a rotor of a generator.

### Effects of the Invention

The permanent magnet-type rotating machine according to the present invention produces a magnetic field by turning on the first electromagnetic coil to allow the permanent magnet and the electromagnet to attract each other, thereby rotating the rotor. Subsequently, the permanent magnet-type rotating machine turns on the second electromagnetic coil to produce a magnetic field in the core with a polarity opposite to that of the first electromagnetic coil, whereby the residual magnetism in the core by the first electromagnetic coil is promptly demagnetized. The permanent magnet-type rotating machine thereafter allows the permanent magnet and the electromagnet to repel each other because of the magnetic field with the opposite polarity produced by the second electromagnetic coil, thereby accelerating the rotation of the rotor.

In this case, when the permanent magnet and the electromagnet attract and thereby approach each other, the residual magnetism in the core of the electromagnet is promptly demagnetized by the magnetic field produced by the second electromagnetic coil. The core of the electromagnet then enters a nullified state in which no attraction force acts on the permanent magnet, thereby effectively reducing cogging torque. Subsequently,the polarity of the magnetic pole of the core of the electromagnet is immediately switched by the second electromagnetic coil from the nullified state to the polarity opposite to the polarity of the first electromagnetic coil. Repulsion force thus acts between the permanent magnet and the electromagnet, so that the rotor achieves sufficient rotation torque. The rotor therefore reaches a predetermined rotation speed in a short time and continues rotation with the sufficient rotation torque. As a result, the permanent magnet-type rotating machine achieves rotation driving force, efficiently using the magnetic energy of the permanent magnets.

The permanent magnet-type rotating machine may have the rotor joined with a generator, thereby providing electric power by efficiently using the magnetic energy of the permanent magnets.

### Brief Description of the Drawings

FIG. 1 is a perspective view of a permanent magnet-type rotating machine in a first embodiment.
FIG. 2 is a plan view of the permanent magnet-type rotating machine illustrated in FIG.1.
FIG. 3 is a cross-sectional view along III-III in FIG. 2.
FIG. 4 is a left side view of FIG. 2.
FIG. 5 is a control block diagram of the permanent magnet-type rotating machine in the first embodiment.
FIG. 6 is an illustration of magnetic fields produced by an electromagnet in the permanent magnet-type rotating machine in the first embodiment.
FIG. 7 is a perspective view of a permanent magnet-type rotating machine in a second embodiment.
FIG. 8 is a plan view of the permanent magnet-type rotating machine illustrated in FIG. 7.
FIG. 9 is an illustration of magnetic fields produced by electromagnets in the permanent magnet-type rotating machine in the second embodiment.
FIG. 10 is an illustration of a modification of a slit plate included in a positional information acquisition unit.
FIG. 11 is an illustration of a modification of the control block of the permanent magnet-type rotating machine.
FIG. 12 is a perspective view of a permanent magnet-type rotating machine in a third embodiment.
FIG. 13 is a plan view of the permanent magnet-type rotating machine illustrated in FIG. 12.
FIG. 14 is a cross-sectional view along XIV-XIV in FIG. 13.
FIG. 15A is a perspective view of a permanent magnet for use in the permanent magnet-type rotating machine in the third embodiment and FIG. 15B is a side view illustration of the permanent magnet.
FIG. 16 is an illustration of magnetic fields produced by an electromagnet in the permanent magnet-type rotating machine in the third embodiment.
FIG. 17A is a perspective view of a permanent magnet-type rotating machine in a fourth embodiment and FIG. 17B is an illustration of arrangement of electromagnets and permanent magnets in FIG. 17A.
FIG. 18A is a cross-sectional view along XVIII-XVIII in FIG. 17A and FIG. 18B is a cross-sectional view of a modification to the fourth embodiment.
FIG. 19A is a cross-sectional view of a permanent magnet-type rotating machine in a fifth embodiment and FIG. 19B is a cross-sectional view of a modification to the fifth embodiment.
FIG. 20 is a partially exploded perspective view of a permanent magnet-type rotating machine in a sixth embodiment.
FIG. 21 is a cross-sectional view of a modification to the sixth embodiment.

### Description of the Preferred Embodiments

Embodiments of the present invention will be described below with reference to the drawings.

### <Configuration of First Embodiment>

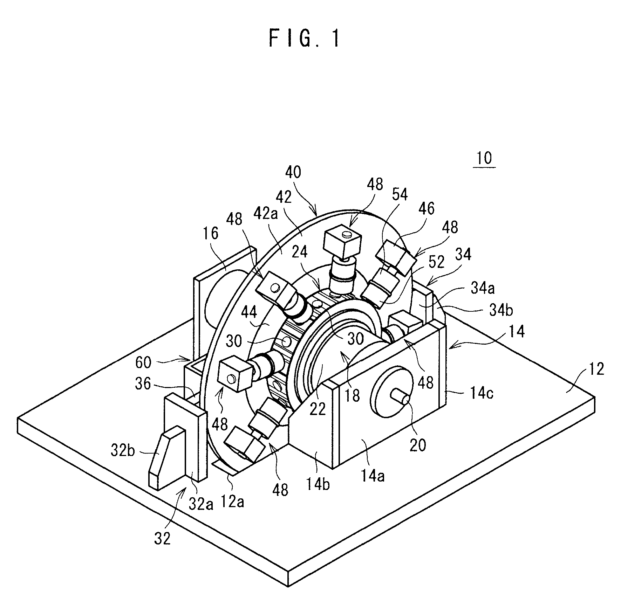

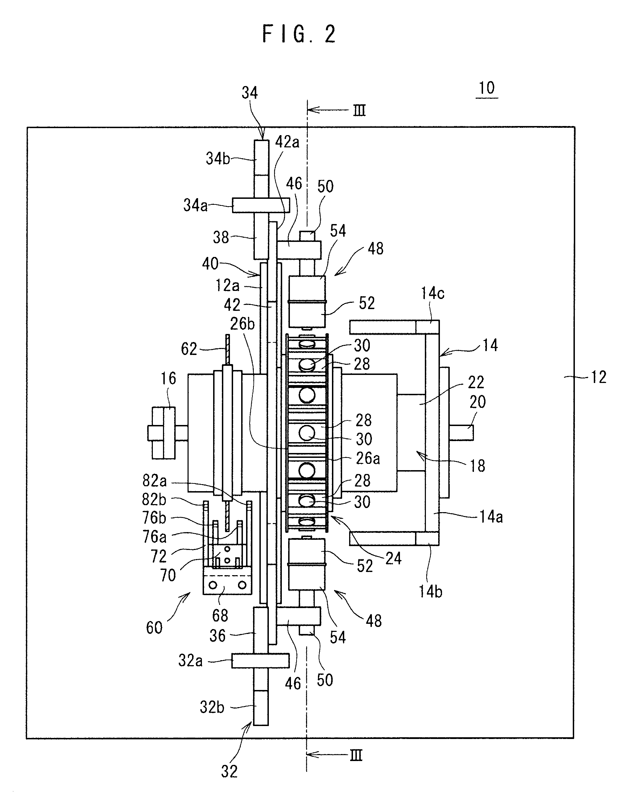

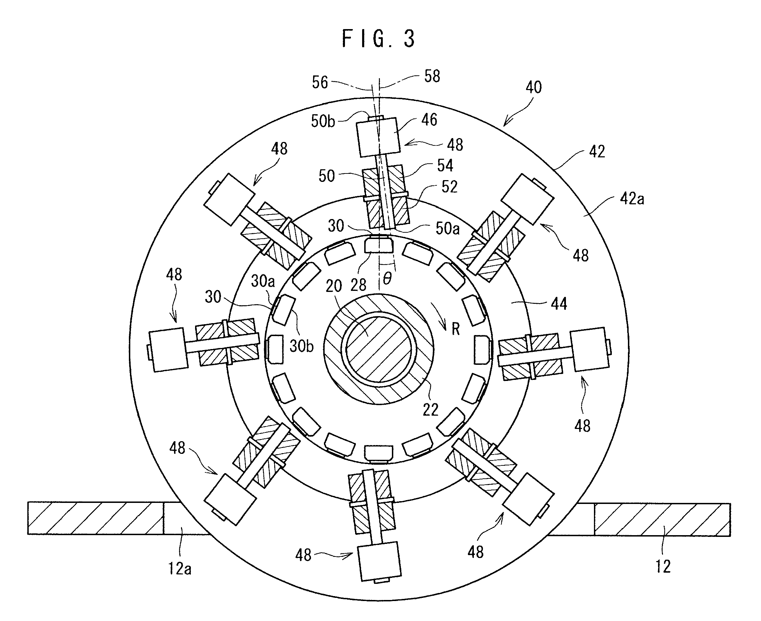

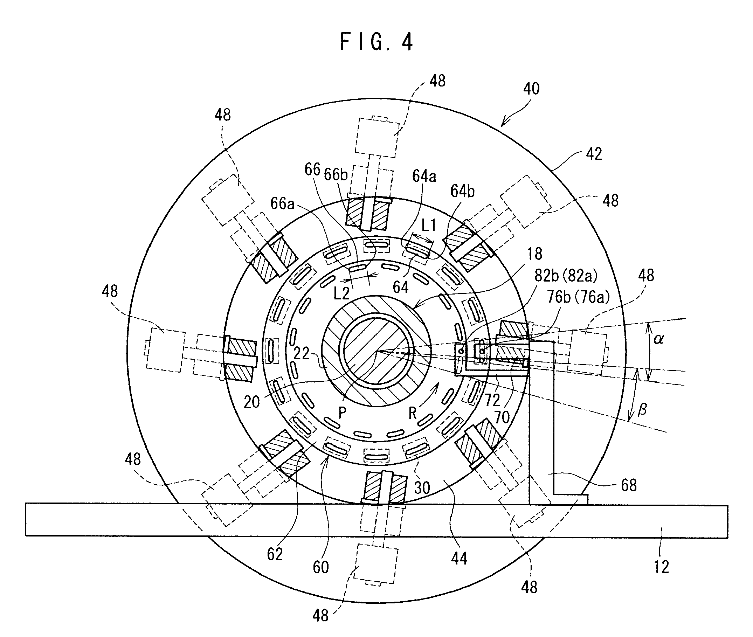

FIG. 1 is a perspective view of a permanent magnet-type rotating machine 10 in a first embodiment. FIG. 2 is a plan view of the permanent magnet-type rotating machine 10 illustrated in FIG. 1. FIG. 3 is a cross-sectional view along III-III in FIG. 2. FIG. 4 is a left side view of FIG. 2.

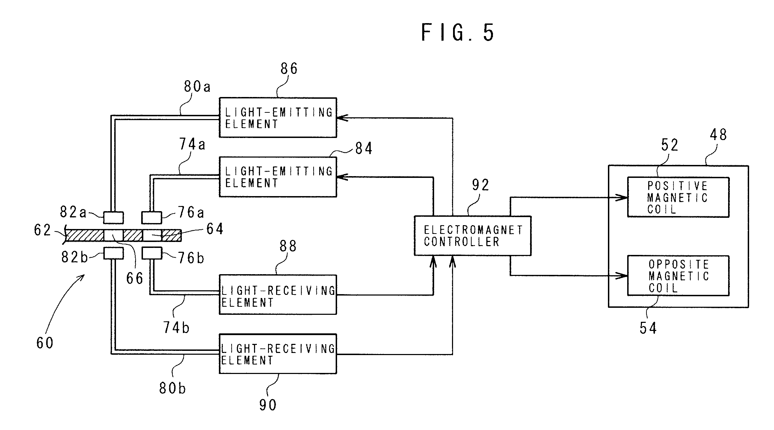

The permanent magnet-type rotating machine 10 includes a rotor 24 having a plurality of permanent magnets 30 disposed thereon, a stator 40 having a plurality of electromagnets 48 disposed thereon, a positional information acquisition unit 60 for acquiring positional information of the permanent magnets 30, and an electromagnet controller 92 (FIG. 5).

On the top of a base 12, a bracket 14 is fixed on one side, and a bracket 16 is fixed on the other side. The bracket 14 includes plate members 14b and 14c joined to both sides of a plate member 14a. The bracket 16 is formed with an approximately L-shaped plate member. The bracket 14 supports one ends of a generator stator 20 and a generator rotor 22 of a generator 18. The bracket 16 supports the other ends of the generator stator 20 and the generator rotor 22. The generator rotor 22 is rotatably mounted on the outer periphery of the generator stator 20.

The rotor 24 is joined to the outer periphery of the generator rotor 22. The rotor 24 includes two disks 26a, 26b and a plurality of permanent magnets 30. The disks 26a, 26b are fixed to the outer periphery of the generator rotor 22. The permanent magnets 30 are disposed with brackets 28 interposed at regular intervals circumferentially on the outer periphery between the disks 26a and 26b. Each permanent magnet 30 has two magnetic poles 30a and 30b (FIG. 3), and all the magnetic poles 30a on the outer peripheral side of the rotor 24 are set to be the same polarity. For example, in the permanent magnet-type rotating machine 10, sixteen permanent magnets 30 are disposed in the brackets 28, and the magnetic poles 30a are set to have the S polarity.

On the top of the base 12, brackets 32 and 34 are additionally fixed on both sides of the generator 18. The bracket 32 includes plate members 32a, 32b, and the bracket 34 includes plate members 34a, 34b. The brackets 32 and 34 support a disk 42 that forms the stator 40, with joint plates 36 and 38 interposed. The disk 42 is partially inserted into a pit 12a formed in the base 12. The disk 42 is coaxial with the rotor 24 and disposed on the bracket 16 side with respect to the rotor 24. The generator rotor 22 is inserted through a circular opening 44 formed at the center of the disk 42.

As illustrated in FIG. 3, a plurality of electromagnets 48 are fixed with clamps 46 on a surface 42a of the disk 42 on the rotor 24 side. The electromagnets 48 are disposed at regular intervals circumferentially of the disk 42. In the present embodiment, eight electromagnets 48 are disposed on the surface 42a. On the inner peripheral side of the electromagnets 48 disposed circumferentially, the permanent magnets 30 mounted on the rotor 24 are disposed to face thereto. Each electromagnet 48 has a positive magnetic coil 52 (first electromagnetic coil) and an opposite magnetic coil 54 (second electromagnetic coil) that are coaxially wound around a single core 50 formed of a magnetic substance. The positive magnetic coil 52 is disposed at a position in proximity to the magnetic pole 30a of the permanent magnet 30. The opposite magnetic coil 54 is disposed at a position at a distance from the magnetic pole 30a of the permanent magnet 30. Of the magnetic poles 50a and 50b (FIG. 3) at both ends of the core 50, the magnetic pole 50a is disposed in proximity to the magnetic pole 30a of the permanent magnet 30. An axial line 56 connecting between the magnetic poles 50a and 50b of the core 50 is inclined by an inclination angle θ relative to an axial line 58 connecting between the magnetic poles 30a and 30b of the permanent magnet 30. The inclination angle θ at which the magnetic pole 50a side is inclined in the rotation direction R of the rotor 24 is set in a range of, for example, 0° ≤ θ ≤ 20°, preferably, 3° ≤ θ ≤ 20° (FIG. 3). The angle θ is preferably set at an angle at which the attraction force of the electromagnet 48 on the permanent magnet 30 is maximized. The positive magnetic coil 52 is excited such that the magnetic pole 50a of the core 50 has a polarity opposite to that of the magnetic pole 30a of the permanent magnet 30. The opposite magnetic coil 54 is exited such that the magnetic pole 50a of the core 50 has the same polarity as the magnetic pole 30a of the permanent magnet 30. In the permanent magnet-type rotating machine 10, the magnetic pole 50a is set to have the N polarity by the positive magnetic coil 52, and the magnetic pole 50a is set to have the S polarity by the opposite magnetic coil 54.

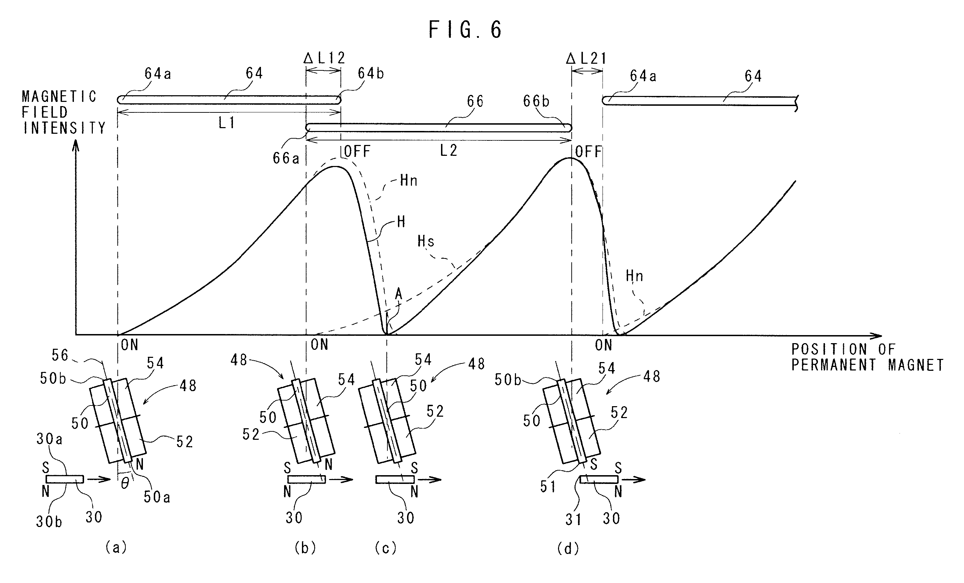

The positional information acquisition unit 60 for acquiring the positional information of the permanent magnet 30 relative to the electromagnet 48 is disposed between the stator 40 and the bracket 16 (FIG. 2). The positional information acquisition unit 60 includes a slit plate 62 that is fixed on the outer periphery of the generator rotor 22 and rotates integrally with the rotor 24, as illustrated in FIG. 4. On the outer peripheral side of the slit plate 62, a plurality of arc-shaped outer peripheral slits 64 are formed corresponding to the positions of the permanent magnets 30. On the inner peripheral side of the slit plate 62, a plurality of arc-shaped inner peripheral slits 66 are formed corresponding to the positions of the permanent magnets 30. The outer peripheral slit 64 generates positional information for turning on/off the positive magnetic coil 52. The inner peripheral slit 66 generates positional information for turning on/off the opposite magnetic coil 54. The outer peripheral slits 64 and the inner peripheral slits 66 are set in an arrangement relation that achieves the timing of turning on/off the positive magnetic coil 52 and the opposite magnetic coil 54 as illustrated in FIG. 6 described later. In the permanent magnet-type rotating machine 10, sixteen outer peripheral slits 64 and sixteen inner peripheral slits 66 are formed corresponding to the respective positions of sixteen permanent magnets 30.

As illustrated in FIG. 4, let the length from one end 64a to the other end 64b of the outer peripheral slit 64 be L1 and the rotation angle of the slit plate 62 relative to the center P be α. The length L1 is determined by the product of the rotation angle α and the distance from the center P to the outer peripheral slit 64. Let the length from one end 66a to the other end 66b of the inner peripheral slit 66 be L2 and the rotation angle of the slit plate 62 relative to the center P be β. The length L2 is determined by the product of the rotation angle β and the distance from the center P to the inner peripheral slit 66. The length L1 of the outer peripheral slit 64 defined by the rotation angle α is set based on the time during which the permanent magnet 30 is attracted by the magnetic field produced by turning on the positive magnetic coil 52. Similarly, the length L2 of the inner peripheral slit 66 defined by the rotation angle β is set based on the time during which the permanent magnet 30 is repelled by the magnetic field produced by turning on the opposite magnetic coil 54. For the outer peripheral slit 64 and the inner peripheral slit 66, a range ΔL12 (FIG. 6) in which they are partially overlapped is set in the rotation direction R of the slit plate 62. The range ΔL12 is the distance in the rotation direction R between one end 66a of the inner peripheral slit 66 and the other end 64b of the outer peripheral slit 64. This overlapping range ΔL12 is set based on the time from when the opposite magnetic coil 54 is turned on to when the positive magnetic coil 52 is turned off. For the outer peripheral slit 64 and the inner peripheral slit 66, a range ΔL21 (FIG. 6) in which they are spaced apart without overlapping is additionally set in the rotation direction R of the slit plate 62. The range ΔL21 is the distance in the rotation direction R between the other end 66b of the inner peripheral slit 66 and one end 64a of the outer peripheral slit 64. The spacing range ΔL21 is set based on the time from when the opposite magnetic coil 54 is turned off to when the positive magnetic coil 52 is turned on.

The positional information acquisition unit 60 also includes two fiber holders 70 and 72 joined to a bracket 68. The fiber holders 70 and 72 are formed such that the slit plate 62 is sandwiched between both sides. The fiber holder 70 has a light-projecting portion 76a and a light-receiving portion 76b disposed to face each other corresponding to the position of the outer peripheral slit 64. The fiber holder 72 has a light-projecting portion 82a and a light-receiving portion 82b disposed to face each other corresponding to the position of the inner peripheral slit 66. The light-projecting portion 76a and the light-receiving portion 76b as well as the light-projecting portion 82a and the light-receiving portion 82b are disposed on the same straight line passing through the center P of the slit plate 62.

FIG. 5 is a control block diagram of the permanent magnet-type rotating machine 10 in the first embodiment. The permanent magnet-type rotating machine 10 includes light-emitting elements 84, 86, light-receiving elements 88, 90, and an electromagnet controller 92. The light-emitting elements 84, 86 supply light to the light-projecting portions 76a, 82a of the positional information acquisition unit 60 through optical fibers 74a, 80a. The light-receiving elements 88, 90 receive light passing through the outer peripheral slit 64 and the inner peripheral slit 66, through light-receiving portions 76b, 82b and optical fibers 74b, 80b. The electromagnet controller 92 controls the light-emitting elements 84, 86 and the light-receiving elements 88, 90.

The electromagnet controller 92 turns on/off the positive magnetic coil 52 and the opposite magnetic coil 54 based on the positional information of the permanent magnet 30 obtained from light detected by the light-receiving elements 88, 90. Here, turning on refers to control of supplying current to at least one of the positive magnetic coil 52 and the opposite magnetic coil 54. Turning off refers to control of cutting off current to at least one of the positive magnetic coil 52 and the opposite magnetic coil 54.

### <Operation of First Embodiment>

The permanent magnet-type rotating machine 10 in the present embodiment is basically configured as described above. The operation thereof will now be described with reference to FIG. 6.

FIG. 6 is an illustration of magnetic fields produced by the electromagnet 48 in the permanent magnet-type rotating machine 10. The horizontal axis of the graph in FIG. 6 represents the position of the permanent magnet 30. The vertical axis of the graph represents the magnetic field intensity (absolute value) at the magnetic pole 50a of the core 50 of the electromagnet 48. The graph represented by the dotted line indicates magnetic field intensities Hn and Hs. Hn is the magnetic field intensity at the magnetic pole 50a of the core 50 when the positive magnetic coil 52 alone is excited. Hs is the magnetic field intensity at the magnetic pole 50a of the core 50 when the opposite magnetic coil 54 alone is excited. The graph represented by the solid line indicates a magnetic field intensity H at the magnetic pole 50a of the core 50. The magnetic field intensity H is obtained based on the magnetic field intensity mainly comprised of the magnetic field intensities Hn and Hs, and the magnetic field intensity induced by the permanent magnet 30 approaching the electromagnet 48. The polarity of the magnetic field produced at the magnetic pole 50a of the core 50 by the positive magnetic coil 52 is opposite to the polarity of the magnetic pole 30a of the permanent magnet 30. The polarity of the magnetic field produced at the magnetic pole 50a of the core 50 by the opposite magnetic coil 54 is the same as the polarity of the magnetic pole 30a of the permanent magnet 30. In the following description, the magnetic pole 30a of the permanent magnet 30 has the S polarity, the magnetic field produced at the magnetic pole 50a of the core 50 by the positive magnetic coil 52 has the N polarity, and the magnetic field produced at the magnetic pole 50a of the core 50 by the opposite magnetic coil 54 has the S polarity.

### (1) Step 1

First, the electromagnet controller 92 drives the light-emitting elements 84, 86. Light output from the light-emitting elements 84, 86 is supplied to the light-projecting portions 76a, 82a of the positional information acquisition unit 60 through the optical fibers 74a, 80a. In this state, the rotor 24 rotates with a rotation force applied in the rotation direction R (FIG. 3). Light emitted from the light-projecting portions 76a, 82a passes through the outer peripheral slit 64 or the inner peripheral slit 66 of the slit plate 62 to enter the light-receiving portion 76b or 82b. Light entering the light-receiving portion 76b or 82b is then supplied to the light-receiving element 88 or 90 through the optical fiber 74b or 80b and is supplied as positional information of the permanent magnet 30 to the electromagnet controller 92. The electromagnet controller 92 turns on the positive magnetic coil 52 or the opposite magnetic coil 54 on the stator 40 based on the positional information supplied from the light-receiving element 88 or 90. In the following description, it is assumed that the positive magnetic coil 52 is first turned on.

### (2) Step 2

When the positive magnetic coil 52 is turned on and supplied with current, the magnetic pole 50a of the core 50 is excited to N. In FIG. 6, (a) illustrates the positional relation between the permanent magnet 30 and the electromagnet 48 at this point of time. The magnetic field intensity Hn produced by the positive magnetic coil 52 gradually increases in proportion to the current flowing through the positive magnetic coil 52. When the magnetic pole 50a of the core 50 is exited to N, an attraction force acts between the permanent magnet 30 and the electromagnet 48 because the magnetic pole 30a of the permanent magnet 30 is S. The permanent magnet 30 is therefore attracted to the electromagnet 48, so that the rotor 24 rotates in the rotation direction R in FIG. 3.

Here, the axial line 56 of the electromagnet 48 is set to be inclined on the magnetic pole 50a side by an angle θ in the rotation direction R of the rotor 24 relative to the axial line 58 vertical to the magnetic pole 30a of the permanent magnet 30. In this case, the attraction force of the magnetic pole 50a of the core 50 acts on the permanent magnet 30 from a distant position. The permanent magnet 30 is thereby attracted by the electromagnet 48 in a state in which a sufficient attraction time is secured, and the rotor 24 starts rotation promptly.

### (3) Step 3

When the permanent magnet 30 is attracted by the electromagnet 48 to cause the rotor 24 to rotate and approaches the core 50 of the electromagnet 48, one end 66a of the inner peripheral slit 66 formed in the slit plate 62 is arranged between the light-projecting portion 82a and the light-receiving portion 82b. In FIG. 6, (b) illustrates the positional relation between the permanent magnet 30 and the electromagnet 48 at this point of time. Light supplied from the light-projecting portion 82a passes through the inner peripheral slit 66 and enters the light-receiving portion 82b. Light entering the light-receiving portion 82b is supplied to the light-receiving element 90 through the optical fiber 80b and supplied to the electromagnet controller 92 as the positional information of the permanent magnet 30 based on the inner peripheral slit 66. The electromagnet controller 92 turns on the opposite magnetic coil 54 on the stator 40, based on the positional information supplied from the light-receiving element 90.

Here, for the outer peripheral slit 64 and the inner peripheral slit 66, the range ΔL12 in which they are partially overlapped is set in the rotation direction R of the slit plate 62 as illustrated in FIG. 4 and FIG. 6. The opposite magnetic coil 54 is therefore turned on before the positive magnetic coil 52 is turned off.

There are two reasons why the opposite magnetic coil 54 is turned on before the positive magnetic coil 52 is turned off. The first reason is to obtain a sufficient attraction force of the positive magnetic coil 52 on the permanent magnet 30. The second reason is to quickly reduce the residual magnetism in the core 50 of the electromagnet 48 to zero at a point A described later. The opposite magnetic coil 54 is disposed at a position more distant from the permanent magnet 30 than the positive magnetic coil 52. Therefore, the time when the magnetic force produced by the opposite magnetic coil 54 appears at the magnetic pole 50a of the core 50 after the opposite magnetic coil 54 is turned on is delayed as compared with the time when the magnetic force produced by the positive magnetic coil 52 appears at the magnetic pole 50a of the core 50 after the positive magnetic coil 52 is turned on. Accordingly, in a case where the opposite magnetic coil 54 is turned on before the positive magnetic coil 52 is turned off, the attraction force of the positive magnetic coil 52 on the permanent magnet 30 does not attenuate rapidly, so that the permanent magnet 30 can be attracted for a sufficient time. When the positive magnetic coil 52 is turned off, the opposite magnetic coil 54 has already been turned on, and, therefore, the residual magnetism in the core 50 by the positive magnetic coil 52 becomes zero quickly. As a result, the force of the permanent magnet 30 attracting the core 50 almost disappears and the nullification of the core 50 is achieved, thereby suppressing cogging torque. The opposite magnetic coil 54 is disposed at a position more distant from the permanent magnet 30 than the positive magnetic coil 52. As illustrated in FIG. 6, the rise of the magnetic field intensity Hn from the turning on to the turning off of the positive magnetic coil 52 is faster than the rise of the magnetic field intensity Hs from the turning on to the turning off of the opposite magnetic coil 54. The fall of the magnetic field intensity Hn and the fall of the magnetic field intensity Hs are the same.

### (4) Step 4

When the other end 64b of the outer peripheral slit 64 passes through between the light-projecting portion 76a and the light-receiving portion 76b, light from the light-emitting element 84 is blocked. The electromagnet controller 92 turns off the positive magnetic coil 52 at this point of time. In this case, the residual magnetism is left in the core 50 although the positive magnetic coil 52 has been turned off, so that the magnetic pole 50a keeps the N polarity. However, because the opposite magnetic coil 54 has already been turned on, the residual magnetism in the core 50 promptly becomes zero because of the magnetic field in the opposite direction that is produced by the opposite magnetic coil 54. As a result, the core 50 is nullified at the point A illustrated in FIG. 6 and enters a state in which it does not attract the permanent magnet 30. In FIG. 6, (c) illustrates the positional relation between the permanent magnet 30 and the electromagnet 48 at this point of time.

When the permanent magnet 30 moves from the position in (c) in FIG. 6, the magnetic pole 50a of the core 50 changes from the state in which the residual magnetism is zero to the S polarity because of the magnetic field of the opposite magnetic coil 54. When the magnetic pole 50a of the core 50 is excited to S, repulsion force acts between the permanent magnet 30 and the core 50 of the electromagnet 48 because the magnetic pole 30a of the permanent magnet 30 has the S polarity. The permanent magnet 30 then repels the electromagnet 48, so that the rotor 24 rotates in the rotation direction R in FIG. 3. Accordingly, the electromagnet 48 in the nullified state is given rotation torque by the repulsion force generated between the permanent magnet 30 and the core 50 of the electromagnet 48, thereby suppressing cogging torque and increasing the rotation speed of the rotor 24.

### (5) Step 5

Subsequently, the rotor 24 is rotated a predetermined angle by the repulsion force caused by the magnetic field of the opposite magnetic coil 54. In FIG. 6, (d) illustrates the positional relation between the permanent magnet 30 and the electromagnet 48 at this point of time. In this case, the electromagnet 48 has the axial line 56 of the core 50 set inclined by the angle θ relative to the axial line 58 of the permanent magnet 30. In the electromagnet 48, therefore, the rear corner 31 of the permanent magnet 30 in the rotation direction R comes closest to the corner 51 of the magnetic pole 50a when the magnetic field intensity Hs produced by the opposite magnetic coil 54 is the maximum. When the corner 51 of the core 50 and the corner 31 of the permanent magnet 30 come closest to each other, the magnetic force between the permanent magnet 30 and the electromagnet 48 is the strongest. Accordingly, the permanent magnet 30 receives the maximum repulsion force from the electromagnet 48, so that the rotor 24 rotates. Subsequently, when the other end 66b of the inner peripheral slit 66 passes through between the light-projecting portion 82a and the light-receiving portion 82b, light from the light-emitting element 86 is blocked. The electromagnet controller 92 turns off the opposite magnetic coil 54 at this point of time.

### (6) Step 6

After the opposite magnetic coil 54 is turned off, one end 64a of the outer peripheral slit 64 passes through between the light-projecting portion 76a and the light-receiving portion 76b before the residual magnetism in the core 50 by the opposite magnetic coil 54 becomes zero. Light from the light-emitting element 84 is then received by the light-receiving element 88. The electromagnet controller 92 turns on the positive magnetic coil 52 again, and the operation of exciting the magnetic pole 50a of the core 50 to the N polarity and attracting the permanent magnet 30 is repeated. In this case, the positive magnetic coil 52 is turned on after the opposite magnetic coil 54 is turned off, whereby the electromagnet controller 92 can make the most of the repulsion force produced by the opposite magnetic coil 54 to rotate the rotor 24.

In the permanent magnet-type rotating machine 10, steps 1 to 6 as described above are repeated whereby the rotor 24 is rotated with cogging torque suppressed, and a predetermined rotation speed can be achieved in a short time. That is, the attraction force of the electromagnet 48 attracts the permanent magnet 30 to rotate the rotor 24. Subsequently, at a point of time when the permanent magnet 30 approaches a predetermined position of the electromagnet 48, the residual magnetism in the electromagnet 48 becomes zero, resulting in a nullified state in which no attraction force acts between the electromagnet 48 and the permanent magnet 30. Accordingly, the rotor 24 is not influenced by torque variations due to attraction force, so that cogging torque does not occur in the rotor 24 at this point of time. Subsequently, the rotor 24 is repelled by the repulsion force of the electromagnet 48 having the polarity inversed by the opposite magnetic coil 54 and continues rotating with the rotation force increased. As a result, the rotor 24 reaches a desired rotation speed promptly.

The generator 18 can take out electric power from the generator stator 20 because the generator rotor 22 joined to the rotor 24 rotates with the rotation of the rotor 24.

In this case, the permanent magnet-type rotating machine 10 efficiently uses the magnetic energy accumulated in the permanent magnet 30 to rotate the rotor 24, so that more electric power than electric power supplied to the electromagnet 48 can be obtained from the generator 18. The permanent magnet-type rotating machine 10 supplies part of the electric power taken out from the generator 18 to the electromagnet 48 after the start of power generation in the generator 18. The permanent magnet-type rotating machine 10 thereafter continues the rotation operation without electric power supplied from the outside.

### <Configuration of Second Embodiment>

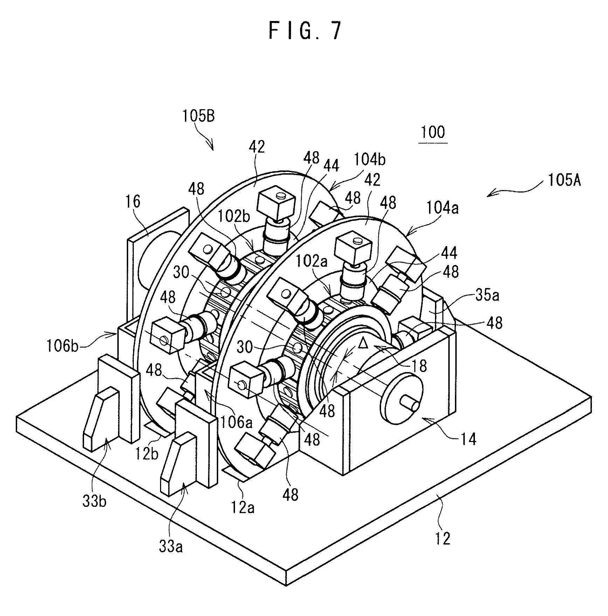

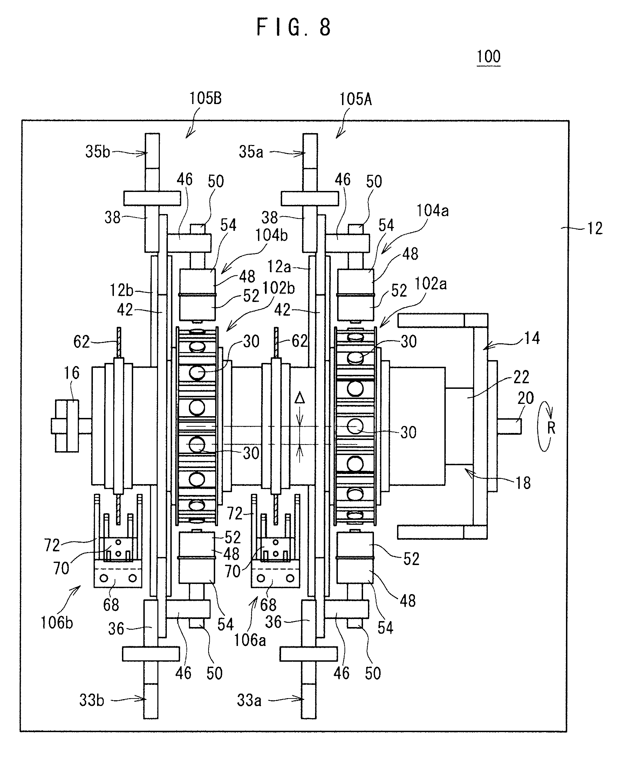

FIG. 7 is a perspective view of a permanent magnet-type rotating machine 100 in a second embodiment. FIG. 8 is a plan view of the permanent magnet-type rotating machine 100 illustrated in FIG. 7. In the following description, the same components as those in the permanent magnet-type rotating machine 10 in the first embodiment are denoted with the same reference signs and a detailed description thereof is omitted.

The permanent magnet-type rotating machine 10 in the first embodiment includes a single rotating mechanism including the rotor 24, the stator 40, and the positional information acquisition unit 60. By contrast, the permanent magnet-type rotating machine 100 in the second embodiment includes two rotating mechanisms, namely, a first rotating mechanism 105A and a second rotating mechanism 105B. The first rotating mechanism 105A includes a rotor 102a, a stator 104a, and a positional information acquisition unit 106a. The second rotating mechanism 105B includes a rotor 102b, a stator 104b, and a positional information acquisition unit 106b. The rotors 102a, 102b have a configuration similar to the rotor 24. The stators 104a, 104b have a configuration similar to the stator 40. The positional information acquisition units 106a, 106b have a configuration similar to the positional information acquisition unit 60.

The first rotating mechanism 105A is disposed on the bracket 14 side. The rotor 102a is fixed to a generator rotor 22 of a generator 18 and is configured to be rotatable together with the generator rotor 22. The stator 104a has a circular opening 44 through which the generator rotor 22 is inserted, and is fixed to a base 12 with brackets 33a, 35a with joint plates 36, 38 interposed. The stator 104a is partially inserted in a pit 12a formed in the base 12. A slit plate 62 that forms the positional information acquisition unit 106a is fixed to the generator rotor 22. The positional information acquisition unit 106a acquires the positional information of permanent magnets 30 mounted on the rotor 102a relative to a plurality of electromagnets 48 disposed on the stator 104a. The second rotating mechanism 105B is disposed on the bracket 16 side. The stator 104b is fixed to the base 12 with brackets 33b, 35b with joint plates 36, 38 interposed. The stator 104b is partially inserted into a pit 12b formed in the base 12. A slit plate 62 that forms the positional information acquisition unit 106b is fixed to the generator rotor 22. The positional information acquisition unit 106b acquires the positional information of the permanent magnets 30 mounted on the rotor 102b relative to a plurality of electromagnets 48 disposed on the stator 104b.

The permanent magnet 30 disposed on the rotor 102a and the permanent magnet 30 disposed on the rotor 102b are arranged so as to be shifted from each other by a phase difference Δ in the rotation direction R of the rotors 102a and 102b, as illustrated in FIG. 7 and FIG. 8. The electromagnet 48 disposed on the stator 104a and the electromagnet 48 disposed on the stator 104b are arranged at the same position at which the phase difference therebetween is zero in the rotation direction R. That is, the arrangement relation between the permanent magnets 30 disposed on the rotors 102a, 102b and the electromagnets 48 disposed on the stators 104a, 104b is set such that the timing when the residual magnetism in the magnetic pole 50a of the electromagnet 48 on the stator 104a becomes zero differs from the timing when the residual magnetism in the magnetic pole 50a of the electromagnet 48 on the stator 104b becomes zero. Preferably, the phase difference Δ is set such that a permanent magnet 30 on the rotor 102a is located at the middle between two permanent magnets 30 on the rotor 102b.

### <Operation of Second Embodiment>

The operation of the permanent magnet-type rotating machine 100 will now be described.

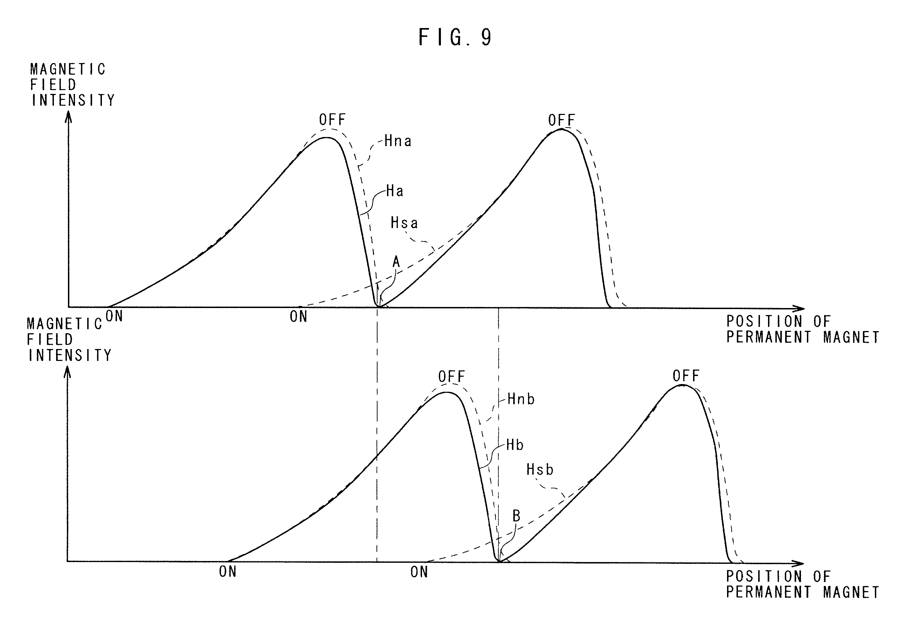

FIG. 9 is an illustration of magnetic fields produced by the electromagnets 48 in the permanent magnet-type rotating machine 100 in the second embodiment. The magnetic field intensities Hna and Hsa illustrated by the dotted line indicate the magnetic field intensities (absolute value) at the magnetic pole 50a of the core 50 as produced by the positive magnetic coil 52 and the opposite magnetic coil 54 of the electromagnet 48 in the stator 104a. The magnetic field intensities Hnb and Hsb illustrated by the dotted line indicates the magnetic field intensities (absolute value) at the magnetic pole 50a of the core 50 that are produced by the positive magnetic coil 52 and the opposite magnetic coil 54 of the electromagnet 48 in the stator 104b. The magnetic field intensities Ha and Hb illustrated by the solid line indicate the magnetic field intensities (absolute value) at the magnetic pole 50a of the core 50 that are obtained based on the magnetic field intensity mainly comprised of the magnetic field intensities Hna and Hsb, and the magnetic field intensity induced by the approaching permanent magnet 30.

The rotation operation by the rotor 102a and the stator 104a and the rotation operation by the rotor 102b and the stator 104b are the same as in the permanent magnet-type rotating machine 10 in the first embodiment. The difference lies in that a point A where the permanent magnet 30 is located when the residual magnetism in the electromagnet 48 on the stator 104a becomes zero and is nullified and a point B where the permanent magnet 30 is located when the residual magnetism in the electromagnet 48 on the stator 104b becomes zero and is nullified are at different locations.

In this case, at the point A, the residual magnetism in the electromagnet 48 on the stator 104a is zero and therefore no rotation torque acts on one rotor 102a while the attraction force of the positive magnetic coil 52 of the electromagnet 48 on the stator 104b acts on the other rotor 102b. At the point B, the residual magnetism in the electromagnet 48 on the stator 104b is zero and therefore no rotation torque acts on the other rotor 102b while the repulsion force of the opposite magnetic coil 54 of the electromagnet 48 on the stator 104a acts on one rotor 102a. Thus, rotation torque always acts on one of the rotors 102a and 102b. As a result, cogging torque in the rotor 102a or 102b is further reduced, and rotation torque is obtained even more efficiently.

The spacing between the permanent magnets 30 in the rotors 102a, 102b greatly affects the attraction and repulsion forces between the electromagnet 48 and the permanent magnet 30. If the spacing between the permanent magnets 30 is too wide, the distance between the electromagnet 48 and the permanent magnet 30 increases and therefore the attraction and repulsion forces do not act efficiently. If the spacing between the permanent magnets 30 is too narrow, the permanent magnet 30 receiving the attraction force of the positive magnetic coil 52 is too close to the positive magnetic coil 52 and therefore a sufficient time of being attracted by the attraction force is not obtained.

In the permanent magnet-type rotating machine 100, the permanent magnets 30 are distributed on two rotators 102a and 102b whereby the spacing between the permanent magnets 30 on each rotor 102a, 102b can be increased. In each rotating mechanism, the permanent magnet 30 is attracted by the attraction force of the electromagnet 48 for a sufficient time, and the rotor 102a, 102b can be rotated effectively with a sufficient attraction force. The rotating mechanisms have the number of rotations easily controlled by mutually complementing the rotation force with the rotors 102a and 102b.

### <Modification of Positional Information Acquisition Unit>

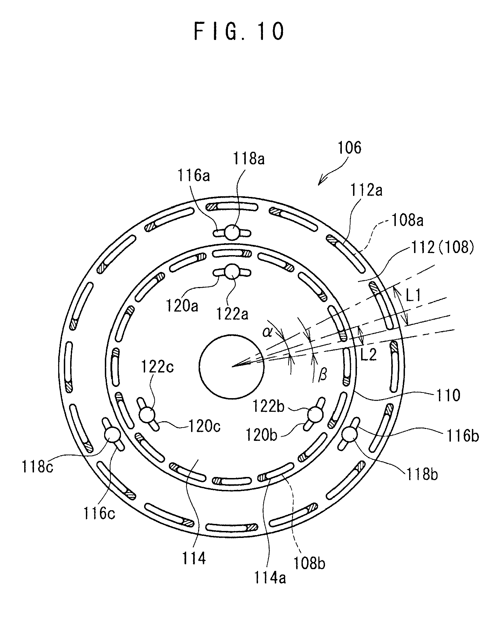

FIG. 10 is an illustration of a modification of the slit plate 62 of the positional information acquisition unit 60, 106a, 106b.

A slit plate 106 includes a first disk 108, a second disk 112, and a third disk 114. The second disk 112 has an outer peripheral diameter equal to that of the first disk 108 and has a circular opening 110 at the center. The second disk 112 is superimposed on the first disk 108. The third disk 114 is mounted on the circular opening 110 of the second disk 112. The first disk 108 has a slit 108a for the positive magnetic coil 52 and a slit 108b for the opposite magnetic coil 54. The second disk 112 has a slit 112a for the positive magnetic coil 52. The third disk 114 has a slit 114a for the opposite magnetic coil 54.

The second disk 112 is joined with the first disk 108 with screws 118a to 118c through long holes 116a to 116c. The length of the arc of the light passage region in the slits 108a, 112a can be easily adjusted by adjusting the overlapping angle between the first disk 108 and the second disk 112. Similarly, the third disk 114 is joined with the first disk 108 with screws 122a to 122c through long holes 120a to 120c. The length of the light blocking region between the light passage regions in the slits 108b, 114a can be easily adjusted by adjusting the overlapping angle between the first disk 108 and the third disk 114.

The electromagnet controller 92 controls the positive magnetic coil 52 by using the light passage region in the slits 108a, 112a. The electromagnet controller 92 also controls the opposite magnetic coil 54 by using the light blocking region between the light passage regions in the slits 108b, 114a. Of course, the positive magnetic coils 52 and the opposite magnetic coils 54 may be controlled by using either the light passage region or the light blocking region of the slit plate 106.

The configuration of the slit plate 106 as illustrated in FIG. 10 facilitates modification to the specifications of the permanent magnet-type rotating machines 10, 100 and adjustment of timing of turning on/off of the positive magnetic coil 52 or the opposite magnetic coil 54.

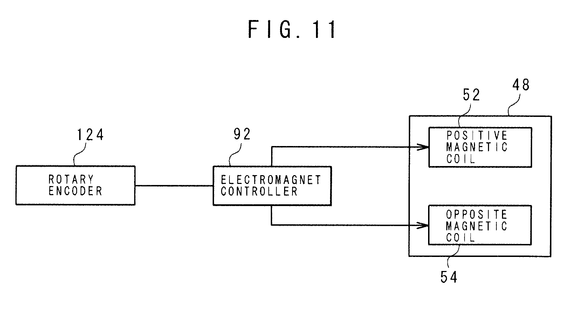

FIG. 11 is an illustration of a modification of the control block of the permanent magnet-type rotating machines 10, 100. This control block illustrates a case using a rotary encoder 124 (positional information acquisition unit) that acquires information related to the rotation position of the rotors 24, 102a, 102b as positional information. The electromagnet 48 is turned on/off based on the rotation angle of the rotors 24, 102a, 102b relative to the reference position that is acquired from the rotary encoder 124, that is, the positional information of the permanent magnet 30 relative to the electromagnet 48.

The electromagnet 48 may be turned on/off based on preset timing data. That is, the relation between the rotation speed of the rotors 24, 102a, 102b and timing data for turning on/off the electromagnet 48 is obtained by measurement in advance and stored in the electromagnet controller 92. The electromagnet controller 92 then calculates the rotation speed based on information of the rotation position detected by the rotary encoder 124 and turns on/off the electromagnet 48 in accordance with the timing data associated with the rotation speed at that point of time. The electromagnet controller 92 thus turns on/off the electromagnet 48 at a precise timing in accordance with the actual positional relation between the electromagnet 48 and the permanent magnet 30.

### <Configuration of Third Embodiment>

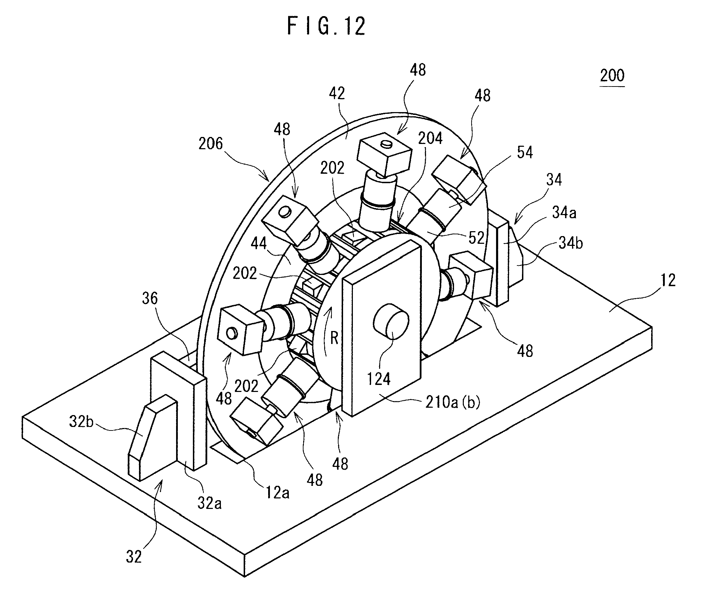

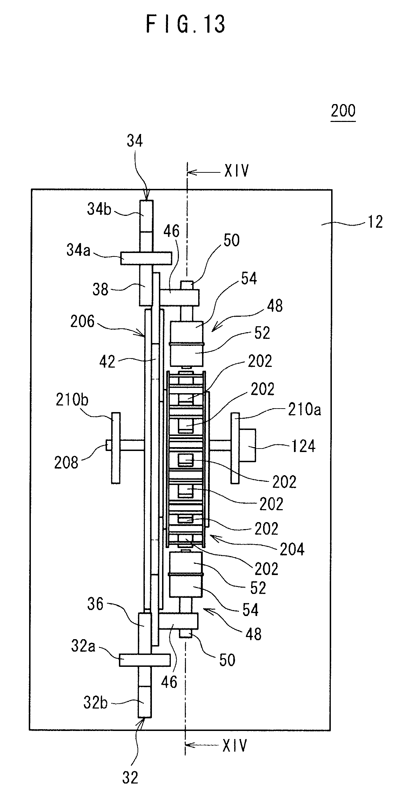

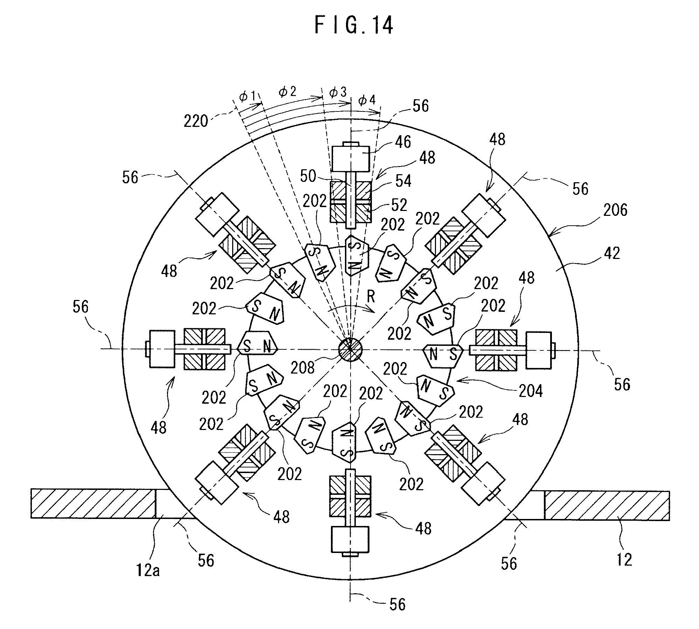

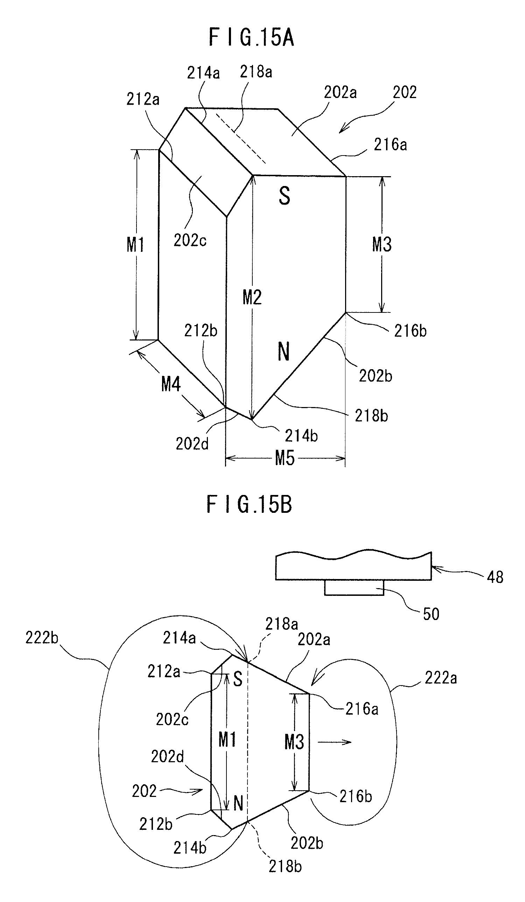

FIG. 12 is a perspective view of a permanent magnet-type rotating machine 200 in a third embodiment. FIG. 13 is a plan view of the permanent magnet-type rotating machine 200 illustrated in FIG. 12. FIG. 14 is a cross-sectional view along XIV-XIV in FIG. 13. FIG. 15A is a perspective view of a permanent magnet 202 for use in the permanent magnet-type rotating machine 200 in the third embodiment and FIG. 15B is a side view illustration of the permanent magnet 202. In the following description, the same components as those in the permanent magnet-type rotating machine 10 in the first embodiment are denoted with the same reference signs and a detailed description thereof is omitted.

The permanent magnet-type rotating machine 200 includes a rotor 204 having a plurality of permanent magnets 202 disposed thereon and a stator 206 having a plurality of electromagnets 48 disposed thereon. The rotor 204 is rotatably supported by a rotor shaft 208. The rotor shaft 208 has both ends supported by brackets 210a, 210b. A rotary encoder 124 for detecting a rotation angle of the rotor 204 is joined to an end of the rotor shaft 208.

Each electromagnet 48 is set such that the axial line 56 of the core 50 passes through the center of the rotor shaft 208 of the rotor 204 as illustrated in FIG. 14.

Each permanent magnet 202 is formed approximately in the shape of a trapezoid. The permanent magnets 202 are set such that all the magnetic poles that face the magnetic poles 50a of the cores 50 have the same polarity. Let the length between corners 212a and 212b of the permanent magnet 202 be M1, the length between corners 214a and 214b be M2, and the length between corners 216a and 216b be M3. The lengths M1 to M3 are set to have a relation: M2 > M1 > M3. The permanent magnet 202 is thus set such that a magnetic pole surface 202a between the corners 214a and 216a that faces the core 50 and a magnetic pole surface 202c between 212a and 214a that faces the core 50 are inclined relative to the core 50. A magnetic pole surface 202b between the corners 214b and 216b and a magnetic pole surface 202d between the corners 212b and 214b are set to be inclined in the same manner as in the magnetic pole surfaces 202a and 202c. In the permanent magnet 202 having such a shape, a magnetic force gradually increases from the corner 216a, 216b side where the length M3 between the magnetic poles is short toward the corner 214a, 214b side where the length M2 between the magnetic poles is long, as illustrated in FIG. 15A and FIG. 15B. The magnetic force of the permanent magnet 202 is the strongest at portions 218a, 218b illustrated by the dotted line closer to the corners 214a, 214b.

The permanent magnet 202 is sized, for example, such that M1 = 35 mm, M2 = 45 mm, M3 = 25 mm, M4 = 17 mm, M5 = 25 mm. The permanent magnet 202 is fixed to the rotor 204 such that the surface on the corner 216a, 216b side is oriented in the rotation direction R of the rotor 204. The magnetic pole of the permanent magnet 202 that faces the core 50 of the electromagnet 48, that is, the magnetic pole surface 202a gradually approaches the core 50 with the rotation of the rotor 204.

### <Operation of Third Embodiment>

The operation of the permanent magnet-type rotating machine 200 will now be described. In the following description, the permanent magnet 202 is set such that the magnetic pole surface 202a closer to the electromagnet 48 has the S polarity and the magnetic pole surface 202b distant from the electromagnet 48 has the N polarity (FIG. 14). The permanent magnet-type rotating machine 200 is controlled by a control circuit illustrated in FIG. 11.

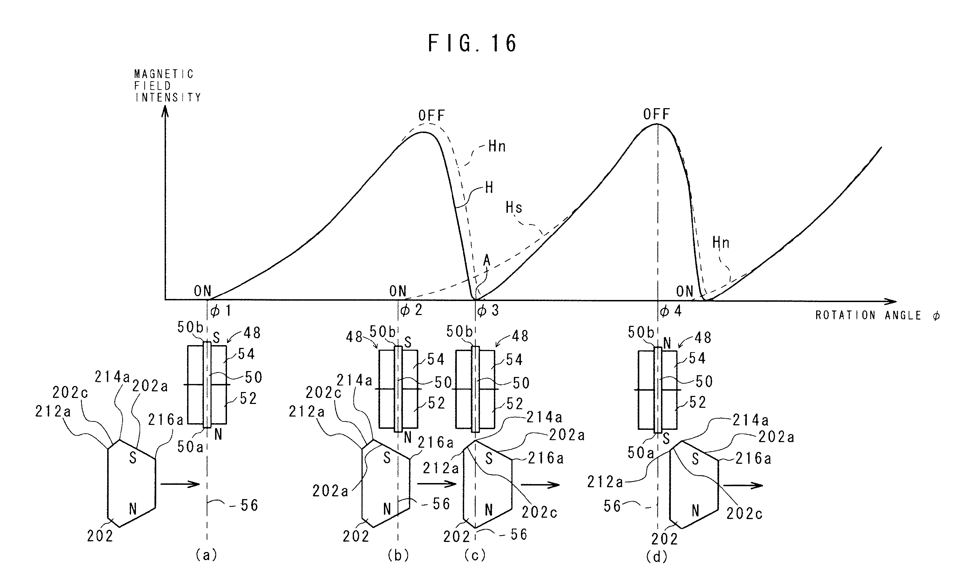

FIG. 16 is an illustration of magnetic fields produced by the electromagnet 48 in the permanent magnet-type rotating machine 200 and has the same characteristics as the magnetic fields in the first embodiment illustrated in FIG. 6. The horizontal axis of the graph in FIG. 16 represents the rotation angle φ of the rotor 204 from the reference position 220 (FIG. 14) as detected by the rotary encoder 124 and corresponds to the rotation position of the permanent magnet 202 relative to the electromagnet 48.

### (1) Step 1

The rotor 204 starts rotation with a rotation force externally applied in the rotation direction R. The rotation angle φ of the rotor 204 from the reference position 220 is detected by the rotary encoder 124.

### (2) Step 2

The rotor 204 rotates in the same manner as in step 2 in the first embodiment. Specifically, the rotary encoder 124 detects that the rotor 204 is rotated by an angle φ1 from the reference position 220, and when the electromagnet 48 and the permanent magnet 202 attain the positional relation illustrated in (a) in FIG. 16, the electromagnet controller 92 turns on the positive magnetic coil 52 of the electromagnet 48. When the positive magnetic coil 52 is turned on, the magnetic pole 50a of the core 50 on the permanent magnet 202 side is excited to N. The electromagnet 48 then attracts the permanent magnet 202 so that the rotor 204 is rotated in the rotation direction R in FIG. 12 and FIG. 14.

Here, the magnetic pole surface 202a of the permanent magnet 202 that faces the core 50 is inclined, and the corner 216a of the permanent magnet 202 on the rotation direction R side is distant from the core 50. The electromagnet 48 therefore attracts the permanent magnet 202 for a long time, during which a sufficient rotation force is applied to the rotor 204.

The permanent magnet 202 has the length M3 between the corners 216a and 216b shorter than the length M1 between the corners 212a and 212b, as illustrated by the magnetic lines of force 222a, 222b in FIG. 15B. The magnetic force on the corner 216a, 216b side is therefore weaker than that on the corner 212a, 212b side. The electromagnet 48 thus attracts the permanent magnet 202 efficiently without being affected by the repulsion force of the magnetic pole (the N polarity) of the permanent magnet 202 on the magnetic pole surface 202b side.

### (3) Step 3

The rotary encoder 124 detects that the rotor 204 rotates by an angle φ2 from the reference position 220, and when the electromagnet 48 and the permanent magnet 202 attain the positional relation illustrated in (b) in FIG. 16, the electromagnet controller 92 turns on the opposite magnetic coil 54, in the same manner as in step 3 in the first embodiment. Subsequently, after the rotor 204 rotates by a predetermined angle, the electromagnet controller 92 turns off the positive magnetic coil 52. Here, the magnetic force at the magnetic pole surface 202a of the permanent magnet 202 gradually increases from the corner 216a toward the corner 214a and is the strongest at the portion 218a (FIG. 15A) closer to the corner 214a. The electromagnet 48 thus attracts the permanent magnet 202 by the magnetic force gradually increasing as the permanent magnet 202 approaches. As a result, a sufficient rotation force is applied to the rotor 204.

### (4) Step 4

At a point of time when the rotor 204 rotates by an angle φ3 from the reference position 220 and the positional relation illustrated in (c) in FIG. 16 is attained, the residual magnetism in the core 50 is demagnetized to be zero by the magnetic field in the opposite direction that is produced by the opposite magnetic coil 54, in the same manner as in step 4 in the first embodiment. As a result, the electromagnet 48 is nullified at the point A illustrated in FIG. 16 and enters a state in which it does not attract the permanent magnet 202. Here, the corner 214a of the permanent magnet 202 is located approximately coincident with the axial line 56 of the electromagnet 48.

### (5) Step 5

Subsequently, the magnetic pole 50a of the core 50 of the electromagnet 48 is promptly switched to the S polarity by the magnetic field of the opposite magnetic coil 54, in the same manner as in step 5 in the first embodiment. Here, the corner 214a of the permanent magnet 202 that is close to the portion 218a where the maximum magnetic force is produced approaches the core 50. The permanent magnet 202 then receives a strong repulsion force from the electromagnet 48. When the corner 214a of the permanent magnet 202 passes through the axial line 56 of the core 50, the magnetic pole surface 202c of S of the permanent magnet 202 that is inclined in the direction opposite to the magnetic pole surface 202a faces the core 50. In this case, the repulsion force of the electromagnet 48 serves as a force that presses the permanent magnet 202 in the rotation direction R through the magnetic pole surface 202c. The repulsion of the electromagnet 48 thus causes a strong force to be applied in the rotation direction R to the permanent magnet 202.

### (6) Step 6

The rotary encoder 124 detects that the rotor 204 rotates by an angle φ4 from the reference position 220, and when the electromagnet 48 and the permanent magnet 202 attain the positional relation illustrated in (d) in FIG. 16, the electromagnet controller 92 turns off the opposite magnetic coil 54 of the electromagnet 48, in the same manner as in step 6 in the first embodiment. Subsequently, the process starting from step 1 is repeated so that the rotor 204 continues the rotation operation.

### <Fourth Embodiment>

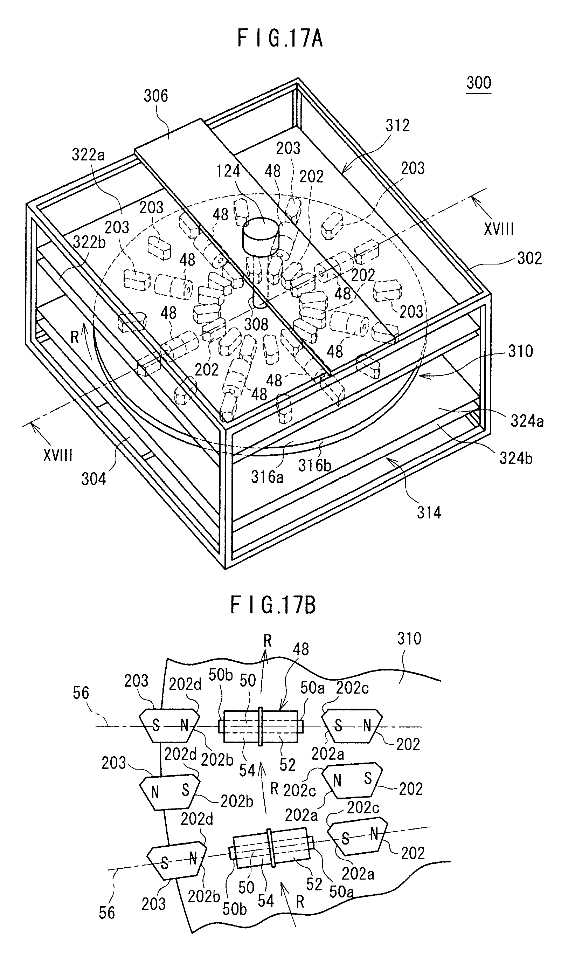

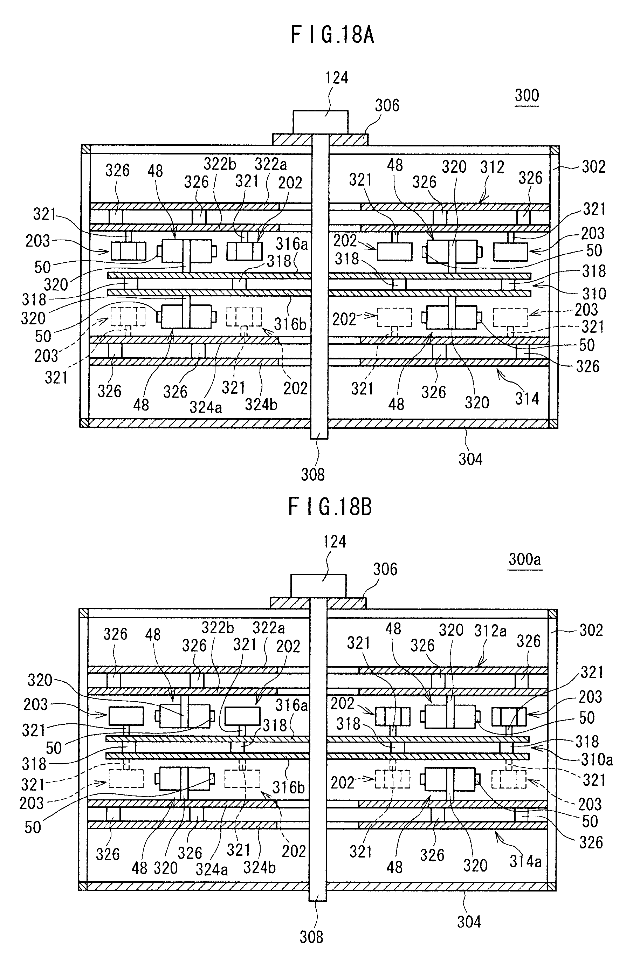

FIG. 17A is a perspective view of a permanent magnet-type rotating machine 300 in a fourth embodiment and FIG. 17B is an illustration of arrangement of electromagnets 48 and permanent magnets 202, 203 in FIG. 17A. FIG. 18A is a cross-sectional view along XVIII-XVIII in FIG. 17A. In the following description, the same components as those in the permanent magnet-type rotating machine 200 in the third embodiment are denoted with the same reference signs and a detailed description is omitted.

The permanent magnet-type rotating machine 300 includes a frame 302 formed in the shape of a rectangle. A support plate 304 is fixed to the bottom of the frame 302, and a support plate 306 is fixed to the top thereof. The support plates 304, 306 support the upper and lower ends of a rotor shaft 308 set in a vertical state. A rotary encoder 124 for detecting the rotation angle of the rotor shaft 308 is joined to the upper end of the rotor shaft 308.

The permanent magnet-type rotating machine 300 includes a rotor 310 and stators 312 and 314 disposed above and below the rotor 310. The rotor 310 includes two disks 316a, 316b and a plurality of electromagnets 48. The disks 316a, 316b joined with a plurality of spacers 318 interposed are fixed to the rotor shaft 308 at the center thereof and rotate on a horizontal plane. A plurality of electromagnets 48 are disposed above and below the disks 316a, 316b with brackets 320 interposed. The electromagnets 48 are set with each core 50 in a horizontal state and are disposed at regular intervals in the rotation direction of the disks 316a, 316b. The axial line 56 (FIG. 17B) of the core 50 passes through the center of the rotor shaft 308 of the rotor 310. In the present embodiment, eight electromagnets 48 are disposed above the disk 316a and eight electromagnets 48 are disposed below the disk 316b.

The stators 312 and 314 include rectangular support plates 322a, 322b and 324a, 324b and a plurality of permanent magnets 202, 203, respectively. The permanent magnet 203 has the same shape as the permanent magnet 202 (FIG. 15A, FIG. 15B). The permanent magnets 202 are disposed on the inner periphery of the rotor 310, and the permanent magnets 203 are disposed on the outer periphery of the rotor 310. The support plates 322a, 322b and 324a, 324b joined with a plurality of spacers 326 interposed are fixed to the frame 302. The permanent magnets 202, 203 are disposed below the support plate 322b and above the support plate 324a with brackets 321 interposed. The permanent magnets 202 and 203 are disposed to face the magnetic poles 50a and 50b, respectively, at both ends of the core 50 as illustrated in FIG. 17B. In the present embodiment, 16 permanent magnets 202 are disposed at regular intervals on the magnetic pole 50a side of the electromagnet 48, and 16 permanent magnets 203 are disposed at regular intervals on the magnetic pole 50b side.

The permanent magnets 202, 203 adjacent in the rotation direction R of the rotor 310 are set such that the magnetic poles facing the core 50 of the electromagnet 48 have different polarities. Specifically, the permanent magnets 202 facing one magnetic pole 50a of the core 50 are set such that the polarities of the magnetic pole surfaces 202a, 202c are in the order of S, N, S, N, ... The permanent magnets 203 facing the other magnetic pole 50b of the core 50 are set such that the polarities of the magnetic pole surfaces 202b, 202d are opposite to those of the permanent magnets 202 on the magnetic pole 50a side, namely, in the order of N, S, N, S, ... The permanent magnets 202, 203 disposed below the support plate 322b and the permanent magnets 202, 203 disposed above the support plate 324a are arranged to be shifted by a phase difference Δ in the rotation direction R of the electromagnets 48 in the same manner as in the permanent magnet-type rotating machine 100 in the second embodiment. In FIG. 18A, the permanent magnets 202 disposed on the stator 314 are illustrated by the dotted line.

### <Operation of Fourth Embodiment>

The operation of the permanent magnet-type rotating machine 300 will now be described. The magnetic field intensity produced at the magnetic pole 50a, 50b of the electromagnet 48, the position of the permanent magnet 202, 203, and the timing of turning on/off the electromagnet 48 are the same as those in the third embodiment illustrated in FIG. 16.

The rotor 310 having the electromagnets 48 starts rotation with a rotation force externally applied in the rotation direction R. Subsequently, the electromagnet controller 92 turns on the positive magnetic coil 52 of the electromagnet 48 so that the electromagnet 48 is attracted by the permanent magnets 202, 203 and rotated. The rotation operation of the rotor 310 based on the magnetic force acting between one magnetic pole 50a of the core 50 of the electromagnet 48 and the permanent magnet 202 having the S pole facing the magnetic pole 50a is the same as in the third embodiment except that the electromagnet 48 side is rotated relative to the permanent magnet 202.

On the other hand, the polarity of the other magnetic pole 50b of the core 50 of the electromagnet 48 is opposite to the polarity of one magnetic pole 50a. While the S pole of one permanent magnet 202 faces the magnetic pole 50a, the N pole of the other permanent magnet 203 faces the magnetic pole 50b of the core 50. Thus, the attraction and repulsion forces are applied from the two permanent magnets 202, 203 to the electromagnet 48 at both of the magnetic poles 50a, 50b of the core 50. As a result, the rotor 310 is rotated with the rotation force almost double that of the permanent magnet-type rotating machine 200 in the third embodiment.

The magnetic lines of force produced by the permanent magnet 202 facing one magnetic pole 50a of the core 50 of the electromagnet 48 are guided to the permanent magnet 203 facing the other magnetic pole 50b through the core 50. In this case, the magnetic flux density of the core 50 largely increases because the magnetic lines of force generated by the electromagnet 48 are added to the magnetic lines of force of the permanent magnets 202, 203. As a result, even stronger attraction force is applied to the electromagnet 48, thereby further increasing the rotation force applied to the rotor 310.

The magnetic poles of the permanent magnets 202 adjacent in the rotation direction R of the rotor 310 are set to have different polarities. For example, when the magnetic pole 50a of the core 50 of the electromagnet 48 has the N polarity, the electromagnet 48 receives repulsion force from the N pole of the permanent magnet 202 downstream in the rotation direction R and receives attraction force from the S pole of the adjacent permanent magnet 202 upstream in the rotation direction R. The electromagnet 48 thus simultaneously receives the repulsion and attraction forces from the permanent magnets 202 adjacent in the rotation direction R and rotates efficiently. Similarly, the electromagnet 48 simultaneously receives the repulsion and attraction forces from the permanent magnets 203 adjacent in the rotation direction and rotates efficiently.

The electromagnet controller 92 may control the timing of turning on/off the electromagnet 48 in accordance with the rotation position of the permanent magnets 202, 203 having the same polarity that face the electromagnet 48. For example, the electromagnet controller 92 may turn on/off the electromagnet 48 considering only the rotation position of the permanent magnets 202, 203 that have the S pole facing the core 50 of the electromagnet 48, among the permanent magnets 202, 203 disposed on the stator 312. The electromagnet controller 92 therefore can increase the time intervals of turning on/off, and the control becomes easy, accordingly.

The operation between the electromagnet 48 disposed below the rotor 310 and the permanent magnets 202, 203 disposed on the stator 314 is the same as in the case described above. In this case, the permanent magnets 202, 203 disposed on the lower stator 314 are arranged to be shifted from the permanent magnets 202, 203 disposed on the upper stator 312 by a phase difference Δ in the rotation direction of the rotor 310. As in the second embodiment, the electromagnet 48 disposed below the rotor 310 receives rotation force from permanent magnets 202, 203 while the electromagnet 48 disposed above is nullified, whereby the rotor 310 continues rotation efficiently.

In the fourth embodiment, the electromagnets 48 are fixed to the rotor 310 and the electromagnets 48 rotate relative to the permanent magnets 202, 203. Accordingly, it is not necessary to strictly set the positional relation between the electromagnet 48 and the permanent magnets 202, 203, and it is only necessary to adjust the timing of turning on/off each of the electromagnets 48 in accordance with the positional relation between the electromagnet 48 and the permanent magnets 202, 203.

### <Modification to Fourth Embodiment>

FIG. 18B is a cross-sectional view of a modification to the fourth embodiment. A permanent magnet-type rotating machine 300a in this modification differs from the permanent magnet-type rotating machine 300 illustrated in FIG. 18A in that electromagnets 48 are fixed to upper and lower stators 312a and 314a while permanent magnets 202, 203 are fixed to a rotor 310a. In this permanent magnet-type rotating machine 300a, the permanent magnets 202, 203 fixed to the rotor 310a rotate relative to the electromagnets 48 fixed to the stators 312a and 314a.

### <Fifth Embodiment>

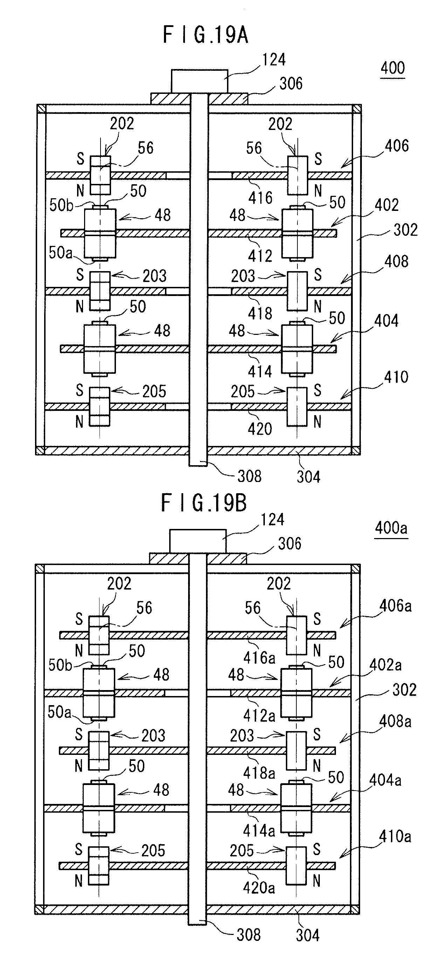

FIG. 19A is a cross-sectional view of a permanent magnet-type rotating machine 400 in a fifth embodiment. In the permanent magnet-type rotating machine 300 (FIG. 18A) in the fourth embodiment, the axial line 56 of the core 50 of the electromagnet 48 is set in a horizontal state, and the direction between the magnetic poles of the permanent magnet 202, 203 is set in a horizontal state. By contrast, in the permanent magnet-type rotating machine 400, the axial line 56 of the core 50 of the electromagnet 48 is set in a vertical state, and the permanent magnets 202, 203, 205 are disposed above and below the electromagnets 48 with the direction between the magnetic poles being set in a vertical state. The permanent magnet 205 has the same shape as the permanent magnets 202, 203. In the following description, the same components as those in the permanent magnet-type rotating machine 300 in the fourth embodiment are denoted with the same reference signs and a detailed description is omitted.

The permanent magnet-type rotating machine 400 includes two rotators 402, 404 and three stators 406, 408, 410 disposed above and below the rotators 402, 404 and between the rotors 402 and 404. The rotors 402, 404 include disks 412, 414 and a plurality of electromagnets 48. The disks 412, 414 are fixed to a rotor shaft 308 at the center thereof and rotate on a horizontal plane. The electromagnets 48 are disposed at regular intervals in the rotation direction of each disk 412, 414 with the axial line 56 of the core 50 in a vertical state. In the present embodiment, eight electromagnets 48 are disposed on each disk 410, 412.

The stators 406, 408, 410 include rectangular support plates 416, 418, 420 and a plurality of permanent magnets 202, 203, 205, respectively. The support plates 416, 418, 420 are fixed to a frame 302. The permanent magnets 202, 203, 205 are disposed on the support plates 414, 416, 418, respectively. The permanent magnets 202, 203, 205 are disposed on a circumference through which the axial line 56 of the core 50 of the electromagnet 48 passes. The permanent magnets 202, 203, 205 are each disposed such that the magnetic pole surfaces 202a, 202b face the magnetic poles 50a and 50b at both ends of the core 50. In the present embodiment, 16 permanent magnets 202, 203, 205 are disposed at regular intervals on each stator 406, 408, 410.

In the stator 406, the adjacent permanent magnets 202 are set such that the polarities of the magnetic pole surfaces 202a, 202b on the rotor 402 side are in the order of S, N, S, N, ... in the rotation direction of the rotor 402. In the stator 408, the adjacent permanent magnets 203 are set such that the polarity of the magnetic pole surface on the rotor 402 side is opposite to the polarity of the permanent magnet 202. Similarly, in the stator 410, the adjacent permanent magnets 205 are set such that the polarity of the magnetic pole surface on the rotor 404 side is opposite to the polarity of the permanent magnet 203.

In the permanent magnet-type rotating machine 400 configured as described above, similar to the permanent magnet-type rotating machine 300, the rotors 402, 404 rotate around the rotor shaft 308 based on the attraction and repulsion forces between the magnetic poles 50a, 50b at both ends of the core 50 of the electromagnet 48 and the permanent magnets 202, 203, 205. In the permanent magnet-type rotating machine 400, the rotors 402, 404 are easily rotated without being affected by the weight of the electromagnets 48 and the disks 412, 414 because the rotor shaft 308 is set in a vertical state.

### <Modification to Fifth Embodiment>

FIG. 19B is a cross-sectional view of a modification to the fifth embodiment. A permanent magnet-type rotating machine 400a in this modification differs from the permanent magnet-type rotating machine 400 illustrated in FIG. 19A in that electromagnets 48 are fixed to support plates 412a, 414a of stators 402a, 404a, while permanent magnets 202, 203, 205 are fixed to disks 416a, 418a, 420a of rotors 406a, 408a, 410a. In this permanent magnet-type rotating machine 400a, the rotors 406a, 408a, 410a having permanent magnets 202, 203, 205 disposed thereon rotate relative to the stators 402a, 404a having the electromagnets 48 disposed thereon.

### <Sixth Embodiment>

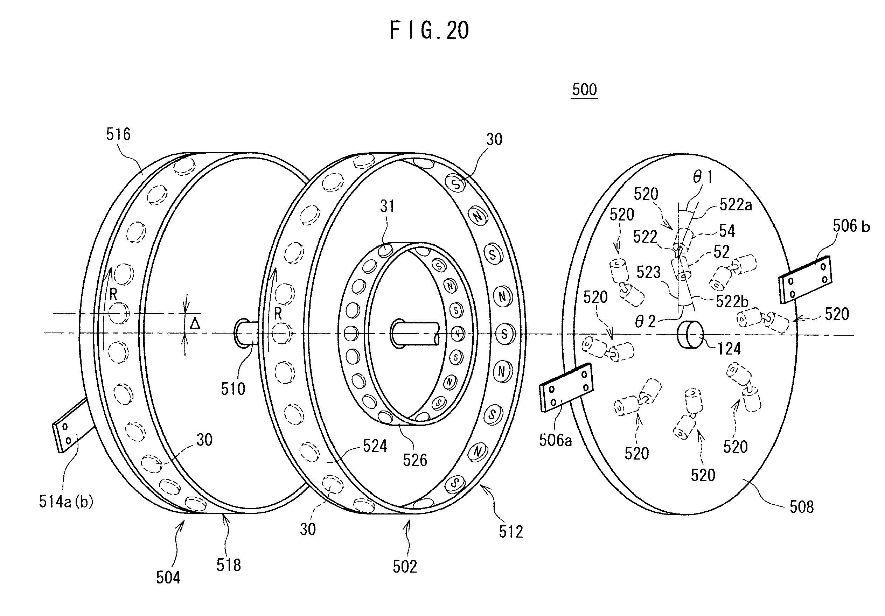

FIG. 20 is a partially exploded perspective view of a permanent magnet-type rotating machine 500 in a sixth embodiment. The permanent magnet-type rotating machine 500 includes a first rotating mechanism 502 and a second rotating mechanism 504.

The first rotating mechanism 502 includes a disk-shaped stator 508 fixed to a not-illustrated attachment through brackets 506a, 506b and a rotor 512 rotating around a rotor shaft 510. Similarly, the second rotating mechanism 504 includes a disk-shaped stator 516 fixed to a not-illustrated attachment through brackets 514a, 514b and a rotor 518 rotating around the rotor shaft 510. A rotary encoder 124 for detecting the rotation angle of the rotors 512, 518 is joined to an end of the rotor shaft 510.

The stator 508 of the first rotating mechanism 502 have a plurality of electromagnets 520 disposed thereon. Each electromagnet 520 has a core 522 bent approximately in the shape of the letter V. The core 522 has a positive magnetic coil 52 wound around one end thereof and an opposite magnetic coil 54 wound around the other end thereof, in the same manner as in the electromagnet 48 in the first embodiment. The electromagnets 520 are disposed at regular intervals with the directions of two axial lines 522a, 522b of the core 522 being inclined by angles θ1 and θ2 in the rotation direction R of the rotor 512 relative to a reference line 523 passing through the center of the rotor shaft 510. The angles θ1, θ2 are set in the following ranges: 0° ≤ θ1 ≤ 20°, 0° ≤ θ2 ≤ 20°, preferably, 3° ≤ θ1 ≤ 20°, 3° ≤ θ2 ≤ 20°.

The rotor 512 of the first rotating mechanism 502 includes an outer peripheral ring 524 and an inner peripheral ring 526. The outer peripheral ring 524 and the inner peripheral ring 526 have a plurality of circular permanent magnets 30 and 31, identical with those in the first embodiment, disposed at regular intervals in the rotation direction R. The magnetic poles of the permanent magnets 30 disposed on the outer peripheral ring 524 and the magnetic poles of the permanent magnets 31 disposed on the inner peripheral ring 526 are set such that the polarities of the magnetic poles facing each other are opposite. The magnetic poles of the adjacent permanent magnets 30, 31 on the outer peripheral ring 524 and the inner peripheral ring 526 are set to have the opposite polarities in the order of S, N, S, N, ..., as in the fourth embodiment illustrated in FIG. 17B. When the stator 508 is mounted on the rotor 512, the electromagnets 520 on the stator 508 are arranged between the outer peripheral ring 524 and the inner peripheral ring 526. The permanent magnet 30 and the permanent magnet 31 are disposed so as to face both ends of the core 522 of the electromagnet 520.

The second rotating mechanism 504 has a configuration similar to the first rotating mechanism 502. It differs in that the position of the permanent magnets 30, 31 disposed on the rotor 518 is set to be shifted from the permanent magnets 30, 31 disposed on the rotor 512 of the first rotating mechanism 502 by a phase difference Δ in the rotation direction R.

### <Operation of Sixth Embodiment>

The operation of the permanent magnet-type rotating machine 500 will now be described.

The rotor 512 of the first rotating mechanism 502 and the rotor 518 of the second rotating mechanism 504 start rotation with a rotation force externally applied in the rotation direction R.

When the positive magnetic coil 52 of the electromagnet 520 in the first rotating mechanism 502 is turned on, the magnetic force produced in the core 522 on the inner peripheral ring 526 side of the rotor 512 attracts the permanent magnet 31 on the inner peripheral ring 526. A magnetic force with the opposite polarity is produced in the core 522 on the outer peripheral ring 524 side. This magnetic force attracts the permanent magnet 30 on the outer peripheral ring 524. In this case, the core 522 of the electromagnet 520 is bent approximately in the shape of the letter V in the rotation direction R of the rotor 512. The core 522 is thus inclined relative to the permanent magnets 30, 31 disposed at both ends of the core 522. This relation is the same as the relation between the core 50 of the electromagnet 48 and the permanent magnet 30 in the first embodiment illustrated in FIG. 3. Specifically, the bending of the core 522 increases the distance between the magnetic pole of the core 522 and the magnetic pole of the permanent magnet 30, 31 and ensures a sufficient time for the electromagnet 520 to attract the permanent magnets 30 ,31. As a result, the electromagnet 520 attracts the permanent magnets 30, 31 thereby applying a sufficient rotation force to the rotor 512.

The operation of the second rotating mechanism 504 is the same as in the first rotating mechanism 502. In this case, the permanent magnets 30, 31 on the rotor 518 of the second rotating mechanism 504 are set to be shifted from the permanent magnets 30, 31 of the first rotating mechanism 502 by a phase difference Δ in the rotation direction R. The electromagnet 520 of the second rotating mechanism 504 applies attraction or repulsion force to the permanent magnets 30, 31 while the electromagnet 520 of the first rotating mechanism 502 is nullified, whereby the second rotating mechanism 504 continues rotation efficiently as in the fourth embodiment.

### <Modification to Sixth Embodiment>

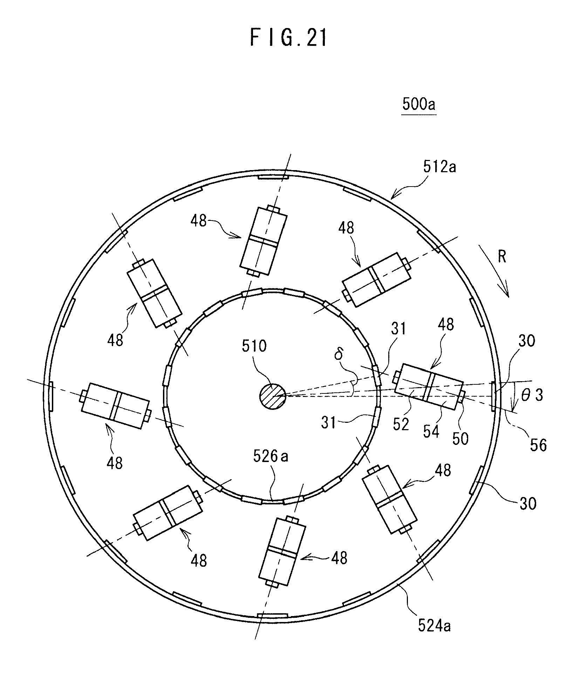

FIG. 21 is a cross-sectional view of a modification to the sixth embodiment. In a permanent magnet-type rotating machine 500a in this modification, a plurality of permanent magnets 48 identical with those in the first embodiment are disposed on the stators 508, 516 in FIG. 20. Each electromagnet 48 is set to be inclined by a predetermined angle θ3 in the rotation direction R of a rotor 512a. A permanent magnet 30 disposed on an outer peripheral ring 524a of the rotor 512a is disposed at a position shifted in the rotation direction R by an angle δ from a permanent magnet 31 disposed on an inner peripheral ring 526a.

In the permanent magnet-type rotating machine 500a configured as described above, the permanent magnet 30 is disposed at a sufficient distance from the core 50 of the electromagnet 48, whereby the rotor 512a is rotated with a sufficient attraction time as is the case with the relation between the permanent magnet 30 and the electromagnet 520. Although the distance between the permanent magnet 31 and the core 50 of the electromagnet 48 is smaller than that of the outer peripheral ring 524a, a rotation force produced by attraction is similarly applied to the rotor 512a.

In the permanent magnet-type rotating machine 500a, the positions of the permanent magnet 30 and the permanent magnet 31 are set to be shifted by a distance corresponding to the angle δ in the inclination angle of the electromagnet 48. With such a setting, the permanent magnets 30, 31 can pass through both ends of the core 50 of the electromagnet 48 simultaneously. In this case, the electromagnet controller 92 achieves synchronization between timings of attraction and repulsion forces produced at both ends of the electromagnet 48 and enables the rotor 512a to rotate efficiently.

It is noted that the present invention is not limited to the foregoing embodiments but is susceptible to modifications within a range that does not depart from the scope of the invention.

For example, in the permanent magnet-type rotating machines 10, 100, and 200, the electromagnets 48 are disposed on the outer periphery of the rotors 24, 102a, 102b, 204. However, one of the electromagnet and the rotor may be disposed on the outer peripheral side and the other may be disposed on the inner peripheral side. The rotors 24, 102a, 102b, 204 may be disposed on the outer periphery side of the electromagnets 48.

In the permanent magnet-type rotating machines 10, 100, 200, 500, and 500a, the electromagnets 48, 520 are fixed while the permanent magnets 30, 31, 202 are rotated. However, as long as the electromagnets and the rotor rotate relative to each other, for example, the permanent magnets 30, 31, 202 may be fixed and the electromagnets 48, 520 may be rotated.

The electromagnet 48 has the positive magnetic coil 52 disposed in proximity to the permanent magnets 30, 202 and the opposite magnetic coil 54 disposed at a distance from the permanent magnets 30, 202. However, the positive magnetic coil 52 may be disposed at a distance from the permanent magnets 30, 202 and the opposite magnetic coil 54 may be disposed in proximity to the permanent magnets 30, 202. In this case, a magnetic field produced by the positive magnetic coil 52 in the core 50 lags behind a magnetic field produced by the opposite magnetic coil 54. The timing of turning on the opposite magnetic coil 54 is set closer to the timing of turning off the positive magnetic coil 52 when compared with the case illustrated in FIG. 6. The timing of turning on the positive magnetic coil 52 is set closer to the timing of turning off the opposite magnetic coil 54 when compared with the case illustrated in FIG. 6. For example, the range ΔL12 in which the outer peripheral slit 64 and the inner peripheral slit 66 are overlapped is set shorter than the one illustrated in FIG. 6. The range ΔL21 in which the outer peripheral slit 64 and the inner peripheral slit 66 are spaced apart is set shorter than the one illustrated in FIG. 6. With such a setting, the timing of turning on/off the positive magnetic coil 52 and the opposite magnetic coil 54 can be adjusted with the opposite magnetic coil 54 disposed on the permanent magnets 30, 202 side. The timing may be adjusted by a rotation angle detected by the rotary encoder 124 instead of by adjusting with the outer peripheral slit 64 and the inner peripheral slit 66.

The cores 50, 522 may be double-wound with two coils at the same position, and the electromagnets 48, 520 may be controlled such that the directions of current supplied to the coils are opposite, so that the positive magnetic coil 52 and the opposite magnetic coil 54 are located at the same position relative to the cores 50, 522. Such a configuration can avoid a deviation in the timing of generation of magnetic fields produced by the positive magnetic coil 52 and the opposite magnetic coil 54.

In the permanent magnet-type rotating machines 10, 100, the axial line 56 of the core 50 of the electromagnet 48 is inclined by an angle θ in the rotation direction R of the rotor 24 relative to the axial line 58 of the permanent magnet 30. However, the axial line 58 of the permanent magnet 30 may be inclined by an angle θ in the rotation direction R of the rotor 24.

In the permanent magnet-type rotating machines 10, 100, 200, the core 50 may be formed with a permanent magnet. In this case, the polarity of the magnetic pole 50a of the core 50 formed with a permanent magnet is set opposite to the polarity of the magnetic pole that the permanent magnets 30, 202 of the rotors 24, 102a, 102b, 204 face, whereby the attraction force of the core 50 of the electromagnet 48 on the permanent magnets 30, 202 increases.

The permanent magnet 202, 203, 205 for use in the permanent magnet-type rotating machine 200, 300, 300a, 400, 400a has two magnetic pole surfaces 202a, 202c and 202b, 202d having different inclination angles at the magnetic poles, as illustrated in FIG. 15A and FIG. 15B. However, the permanent magnet is not limited to this shape. The permanent magnet 202, 203, 205 may have any shape as long as the magnetic force gradually changes in the direction orthogonal to the direction between the magnetic poles. For example, each magnetic pole of the permanent magnet 202, 203, 205 may be formed with a single continuous inclined surface including the magnetic pole surfaces 202a and 202b.

The light-projecting portion 76a and the light-receiving portion 76b as well as the light-projecting portion 82a and the light-receiving portion 82b of the positional information acquisition unit 60 are disposed on the same straight line passing through the center P of the slit plate 62. However, they are not limited to such a configuration. The light-projecting portion 76a and the light-receiving portion 76b as well as the light-projecting portion 82a and the light-receiving portion 82b may be set based on the relative arrangement relation with the outer peripheral slit 64 and the inner peripheral slit 66 such that the timing of turning on/off the positive magnetic coil 52 and the opposite magnetic coil 54 illustrated in FIG. 6 can be achieved.

In the foregoing description, the timing of rotation start of the rotors 24, 102a, 102b, 204, 310, 310a, 402, 404, 406a, 408a, 410a, 512, 512a, 518 is such that the positive magnetic coil 52 is turned on first. However, the opposite magnetic coil 54 may be turned on first. In this case, the rotor starts rotation by the repulsion force of the opposite magnetic coil 54 and then continues rotation by the attraction force of the positive magnetic coil 52.

The permanent magnet-type rotating machine 100, 300, 300a, 400, 400a, 500, 500a includes two rotating mechanisms. However, three or more rotating mechanisms may be included. In this case, the permanent magnets or the electromagnets disposed on each rotating mechanism may be preferably arranged such that the timing when the residual magnetism in the core of the electromagnet on each rotating mechanism becomes zero varies among the rotating mechanisms. The position of the permanent magnet or the electromagnet in each rotating mechanism is preferably set with a phase difference Δ obtained by equally dividing the distance between the permanent magnets by the number of rotating mechanisms.

In the permanent magnet-type rotating machine 100, the permanent magnet 30 disposed on the rotor 102a and the permanent magnet 30 disposed on the rotor 102b may be arranged at the same position relative to the rotation direction, and the electromagnet 48 disposed on the stator 104a and the electromagnet 48 disposed on the stator 104b may be arranged to be shifted by a phase difference Δ relative to the rotation direction.

In the forgoing first to sixth embodiments, sixteen permanent magnets 30, 31, 202, 203, 205 are used for eight electromagnets 48, 520. However, the number is not limited thereto. The number of electromagnets 48, 520 and permanent magnets 30, 31, 202, 203, 205 is set as appropriate considering the number of necessary rotation, or, the attraction force of the positive magnetic coil 52 and the repulsion force of the opposite magnetic coil 54. For example, in a case where a generator is joined to the rotor shaft of the permanent magnet-type rotating machine, the number of electromagnets is preferably set to a multiple of three in order to obtain three-phase alternating current.

Examples of the means for detecting a relative position between a permanent magnet on the rotor and an electromagnet on the stator include photo-couplers, magnetic sensors, and other means for mechanically detecting the rotation position of the rotor using a dog or a cam.

The rotation direction R of the rotor may be counterclockwise although it is clockwise in FIG. 3. In this case, for example, in the case of the permanent magnet-type rotating machine 10, the axial line 56 of the core 50 is inclined on the magnetic pole 50a side by an angle θ in the rotation direction of the rotor 24 relative to the axial line 58 of the permanent magnet 30, in the same manner as in the case where the rotation direction is clockwise. The outer peripheral slit 64 and the inner peripheral slit 66 formed in the slit plate 62 are set in an arrangement relation that achieves the timing of turning on/off the positive magnetic coil 52 and the opposite magnetic coil 54 illustrated in FIG. 6. Similarly, as for the rotation direction R of the rotors 102a, 102b of the permanent magnet-type rotating machine 100, the rotors 102a, 102b may be configured to rotate in the direction opposite to that in FIG. 8.

A flywheel may be disposed for each rotor. The flywheel disposed coaxially can stabilize the rotation speed of the rotor.

In the permanent magnet-type rotating machine 100 used as a generator, both of the two rotors 102a, 102b are fixed to the generator rotor 22 and they are rotated in the same rotation direction R. By contrast, one rotor 102a may be fixed to the generator rotor 22 while the other rotor 102b may be fixed to the generator stator 20 that is rotatable. The permanent magnet-type rotating machine having such a configuration allows rotation of the rotors 102a, 102b in directions opposite to each other.

The permanent magnet-type rotating machine 200, 300, 300a, 400, 400a, 500, 500a can be used as a generator. In such a case, a generator rotor may be used instead of the rotor shaft 208, 308, 510, and the rotor 204, 310, 310a, 402, 404, 406a, 408a, 410a, 512, 512a, 518 may be fixed to this generator rotor. In the permanent magnet-type rotating machine 300, 300a, 400, 400a, 500, 500a, the rotors 310, 310a, 402, 404, 406a, 408a, 410a, 512, 512a, 518 may be configured to rotate in directions opposite to each other.

In the permanent magnet-type rotating machines 10, 100, 200, 300, 300a, 400, 400a, 500, 500a, the interior of the permanent magnet-type rotating machine may be set in a vacuum state.

Electric power generated by the generator 18 is partially supplied to the electromagnets 48 while the rest may be supplied to other apparatuses, for example, home appliances, automobiles, or other applications that require electricity.

The permanent magnet-type rotating machines 10, 100 provide electric power by rotating the generator 18. However, the generator 18 may be replaced by a drive shaft to provide drive power for application to drive sources that rotatably drive a variety of mechanisms, for example, motors.

### Key to Symbols

10, 100, 200, 300, 300, 300a, 400, 400a, 500, 500a: permanent magnet-type rotating machine
12: base
12a, 12b: pit
14, 16, 28, 32, 32a, 32b, 33a, 33b, 34, 34a, 34b, 35a, 35b, 68, 210a, 210b, 320, 321, 506a, 506b, 514a, 514b: bracket
14a to 14c: plate member
18: generator
20: generator stator
22: generator rotor
24, 102a, 102b, 204, 310, 310a, 402, 404, 406a, 408a, 410a, 512, 512a, 518: rotor
26a, 26b, 42, 316a, 316b, 412, 414, 416a, 418a, 420a: disk
30, 31, 202, 203, 205: permanent magnet
30a, 30b, 50a, 50b: magnetic pole
31, 51: corner
36, 38: joint plate
40, 206, 312, 314, 312a, 314a, 402a, 404a, 406, 408, 410, 508, 516: stator
42a, 254a to 254c: surface
44, 110: circular opening
46: clamp
48, 520: electromagnet
50, 522: core
52: positive magnetic coil
54: opposite magnetic coil
56 to 59: axial line
60, 106a, 106b: positional information acquisition unit
62: slit plate
64, 66, 108a, 108b, 112a, 114a: slit
70, 72: fiber holder
74a, 74b, 80a, 80b: optical fiber
76a, 82a: light-projecting portion
76b, 82b: light-receiving portion
84, 86: light-emitting element
88, 90: light-receiving element
92: electromagnet controller
105A, 202A, 502: first rotating mechanism
105B, 202B, 504: second rotating mechanism
108: first disk
112: second disk
114: third disk
116a to 116c, 120a to 120c: long hole
118a to 118c, 122a to 122c: screw
124: rotary encoder
202a to 202d: magnetic pole surface
206, 304, 306: support plate
208, 308: rotor shaft
212a, 212b, 214a, 214b, 216a, 216b: corner
218a, 218b: portion
220: reference position
302: frame
318, 326: spacer
322a, 322b, 324a, 324b, 412a, 414a, 416, 418, 420: support plate
523: reference line
524: outer peripheral ring
526: inner peripheral ring

## Claims

1. A permanent magnet-type rotating machine comprising:
a rotor and a stator, one of which has a plurality of permanent magnets disposed thereon at regular intervals circumferentially, and the other of which has a plurality of electromagnets disposed thereon at regular intervals circumferentially, each electromagnet having a magnetic pole of a core that faces a magnetic pole of the corresponding permanent magnet;
a positional information acquisition unit that acquires positional information of the permanent magnets relative to the electromagnets; and
an electromagnet controller that turns on/off each of the electromagnets based on the acquired positional information of the permanent magnets, wherein
each electromagnet includes a first electromagnetic coil that excites the magnetic pole of the core that faces the magnetic pole of the permanent magnet to a polarity opposite to a polarity of the magnetic pole of the permanent magnet and a second electromagnetic coil that excites the magnetic pole of the core that faces the magnetic pole of the permanent magnet to the same polarity as a polarity of the magnetic pole of the permanent magnet, the first electromagnetic coil and the second electromagnetic coil are coaxially arranged, and
the electromagnet controller turns on the second electromagnetic coil in a period of time from turning on to turning off of the first electromagnetic coil and turns on the first electromagnetic coil before residual magnetism in the core by the second electromagnetic coil becomes zero after the second electromagnetic coil is turned off, based on the acquired positional information of the permanent magnets.

2. The permanent magnet-type rotating machine according to claim 1, wherein an axial line direction between the magnetic poles of each electromagnet is set to be inclined by a predetermined angle in a rotation direction of the rotor relative to an axial line direction between the magnetic poles of the permanent magnet.

3. The permanent magnet-type rotating machine according to claim 1, wherein when the electromagnet and the permanent magnet approach each other, the permanent magnet is set such that a length of a surface that approaches the electromagnet in a direction between the magnetic poles of the permanent magnet is shorter than a length of a portion where a magnetic force of the permanent magnet is maximum in the direction between the magnetic poles.

4. The permanent magnet-type rotating machine according to any one of claims 1 to 3, wherein the permanent magnets are disposed to face the magnetic poles at both ends of the core, and the facing magnetic poles of the permanent magnets disposed at the ends are set to have polarities opposite to each other.

5. The permanent magnet-type rotating machine according to claim 4, wherein the permanent magnets adjacent in a rotation direction of the rotor have different polarities at the magnetic poles that face the core.

6. The permanent magnet-type rotating machine according to claim 4 or 5, wherein an axial line direction of each electromagnet is disposed in a horizontal state, and the rotor is configured to rotate on a horizontal plane.

7. The permanent magnet-type rotating machine according to claim 4 or 5, wherein an axial line direction of each electromagnet is disposed in a vertical state, and the rotor is configured to rotate on a horizontal plane.

8. The permanent magnet-type rotating machine according to claim 1, wherein
the permanent magnets are disposed to face the magnetic poles at both ends of the core, and the facing magnetic poles of the permanent magnets disposed at the ends are set to have polarities opposite to each other, and
the core of each electromagnet is bent approximately in a shape of letter V, and the core is disposed to be inclined relative to the permanent magnets disposed to face the magnetic poles at both ends of the core.

9. The permanent magnet-type rotating machine according to any one of claims 1 to 8, wherein
the positional information acquisition unit includes:
a slit plate having a slit formed at a position corresponding to the permanent magnet, the slit plate rotating integrally with the rotor;
a light-emitting element that outputs light to be guided to the slit plate; and
a light-receiving element that receives the light passing through the slit, and
the positional information of the permanent magnet is acquired based on the light passing through the slit or blocked by the slit plate.

10. The permanent magnet-type rotating machine according to any one of claims 1 to 8, wherein the positional information acquisition unit is configured with a rotary encoder that acquires the positional information as information related to a rotation angle of the rotor.

11. The permanent magnet-type rotating machine according to any one of claims 1 to 10, further comprising
a plurality of rotating mechanisms each including the rotor and the stator,
wherein
an arrangement relation between the permanent magnet and the electromagnet in each rotating mechanism is set such that a timing when residual magnetism in the core of the electromagnet in each rotating mechanism becomes zero differs.

12. The permanent magnet-type rotating machine according to any one of claims 1 to 11, wherein a rotor shaft of the rotor is configured with a rotor of a generator.
